# EUROPÄISCHE PATENTSCHRIFT

(11) **EP 3 899 450 B1**
(45) Veröffentlichungstag und Bekanntmachung des Hinweises auf die Patenterteilung: **06.08.2025**
(21) Anmeldenummer: 19808766.0
(22) Anmeldetag: 21.11.2019
(51) Int. Cl.: G01F 1/84, G01F 15/02, G01F 15/10, G01F 15/14

(54) **VIBRONISCHES MESSSYSTEM**
VIBRONIC MEASURING SYSTEM
SYSTÈME DE MESURE VIBRONIQUE

(30) Priorität: 21.12.2018 DE 102018133318
(43) Veröffentlichungstag der Anmeldung: 27.10.2021
(73) Patentinhaber: Endress+Hauser Flowtec AG, 4153 Reinach (CH)
(72) Erfinder: ZHU, Hao, 85354 Freising (DE); HUBER, Reinhard, 79713 Bad Säckingen (DE); ECKERT, Gerhard, 79639 Grenzach-Wyhlen (DE); SCHERRER, Marco Oliver, 4132 Muttenz (CH)
(74) Vertreter: Endress + Hauser Group Services (Deutschland) AG+Co. KG
(86) Internationale Anmeldenummer: PCT/EP2019/082044
(87) Internationale Veröffentlichungsnummer: WO 2020/126285

(56) Entgegenhaltungen:
- WO-A1-2012/028425
- DE-A1- 102015 104 931
- US-A1- 2011 167 907

## Beschreibung

Die Erfindung betrifft ein, insb. Coriolis-Massendurchfluß-Meßgerät bzw.

Coriolis-Massendurchfluß-/Dichte-Meßgerät, ausgebildetes vibronisches Meßsystem.

Ein gattungsgemäßes Meßsystem, nämlich ein dem Messen eines Massenstroms eines strömenden Meßstoffs dienliches vibronisches Meßsystem ist beispielsweise in der US-A 2017/0356777 oder der WO-A 2012/028425 beschrieben. Das Meßsystem weist jeweils einen Meßwandler mit einer Rohranordnung zum Führen des strömenden Fluids, mit einer Erregeranordnung zum Wandeln elektrischer Leistung in dem Anregen und Aufrechterhalten erzwungener mechanischer Schwingungen der Rohranordnung dienliche mechanische Leistung und mit einer Sensoranordnung zum Erfassen von mechanischen Schwingungen der Rohranordnung und zum Bereitstellen von jeweils Schwingungsbewegungen der Rohranordnung repräsentierenden Schwingungsmeßsignalen sowie eine mit dem Meßwandler, nämlich sowohl mit dessen Erregeranordnung als auch mit dessen Sensoranordnung elektrisch gekoppelte Meß- und Betriebselektronik mit einer ersten und zweiten Treiberschaltung zum Bereitstellen elektrischer Leistung für die Erregeranordnung und mit einer Meßumformerschaltung zum Verarbeiten von Schwingungsmeßsignalen der Sensoranordnung und zum Ansteuern der Treiberschaltung auf.

Die Rohranordnung weist einen - hier als Leitungsverzweigung dienlichen bzw. einlaßseitigen - ersten Strömungsteiler mit genau vier Strömungsöffnungen, einen dem ersten Strömungsteiler baugleichen - hier als Leitungsvereinigung dienlichen bzw. auslaßseitigen - zweiten Strömungsteiler mit genau vier Strömungsöffnungen sowie vier jeweils abschnittsweise gekrümmte, lediglich paarweise baugleiche Rohre, nämlich ein erstes Rohr, ein dem ersten Rohr baugleiches zweites Rohr, ein drittes Rohr sowie ein lediglich dem dritten Rohr baugleiches viertes Rohr auf. Jedes der Rohre der Rohranordnung erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer metallischen Rohrwandung umschlossenes, sich jeweils vom jeweiligen ersten Ende des jeweiligen Rohrs bis zum jeweiligen zweiten Ende nämlichen Rohrs erstreckenden Lumen auf. Zudem ist jedes der Rohre der Rohranordnung jeweils an jeden der ersten und zweiten Strömungsteiler angeschlossen ist, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers, das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers münden. Darüberhinaus ist jedes der Rohre der Rohranordnung jeweils auch eingerichtet, von Meßstoff durchströmt und währenddessen vibrieren gelassen zu werden.

Die Erregeranordnung weist dafür zwei elektrodynamische Schwingungserreger auf, von denen ein erster Schwingungserreger mechanisch mit sowohl dem ersten Rohr als auch dem zweiten Rohr sowie elektrisch mit der ersten Treiberschaltung verbunden ist und ein zweiter Schwingungserreger mechanisch mit sowohl mit dem dritten Rohr als auch dem vierten Rohr sowie elektrisch mit der zweiten Treiberschaltung verbunden ist. Jeder der ersten und zweiten Schwingungserreger ist zudem jeweils eingerichtet, elektrische in mechanische Leistung zu wandeln. Die erste Treiberschaltung wiederum ist dafür eingerichtet, ein elektrisches erstes Treibersignal zu generieren und damit elektrische Leistung lediglich in den ersten Schwingungserreger einzuspeisen, derart, daß die ersten und zweiten Rohre zumindest anteilig Nutzschwingungen, nämlich gegengleiche erzwungene mechanische Schwingungen mit wenigstens einer ersten Nutzfrequenz, nämlich einer durch das erste Treibersignal vorgegebenen einer ersten Resonanzfrequenz der Rohranordnung entsprechenden Schwingungsfrequenz ausführen, die geeignet sind, im durch die ersten und zweiten Rohre jeweils hindurchströmenden Meßstoff vom Massenstrom abhängige Corioliskräfte zu bewirken, während die zweite Treiberschaltung eingerichtet ist, ein elektrisches zweites Treibersignal zu generieren und damit elektrische Leistung lediglich in den zweiten Schwingungserreger einzuspeisen, derart, daß die dritten und vierten Rohre zumindest anteilig Nutzschwingungen, nämlich gegengleiche erzwungene mechanische Schwingungen mit wenigstens einer zweiten Nutzfrequenz, nämlich einer durch das zweite Treibersignal vorgegebenen, einer zweiten Resonanzfrequenz der Rohranordnung entsprechenden Schwingungsfrequenz ausführen, die geeignet sind, im durch die dritten und vierten Rohre jeweils hindurchströmenden Meßstoff vom Massenstrom abhängige Corioliskräfte zu bewirken.

Zum Erfassen von Schwingungen der Rohranordnung weist die Sensoranordnung vier voneinander beabstandete elektrodynamische Schwingungssensoren auf, von denen ein erster Schwingungssensor und ein zweiter Schwingungssensor mechanisch jeweils mit sowohl dem ersten Rohr als auch dem zweiten Rohr sowie elektrisch jeweils mit der Meßumformerschaltung verbunden sind und ein dritter Schwingungssensor und ein vierter Schwingungssensor mechanisch jeweils mit sowohl dem dritten Rohr als auch dem vierten Rohr sowie elektrisch ebenfalls jeweils mit der Meßumformerschaltung verbunden sind. Jeder der Schwingungssensoren ist zudem jeweils eingerichtet, Schwingungsbewegungen der damit mechanische jeweils verbundenen ersten, zweiten, dritten bzw. vierten Rohre zu erfassen und ein nämliche Schwingungsbewegungen repräsentierendes erstes, zweites, drittes bzw. viertes Schwingungsmeßsignal bereitzustellen.

Die Meßumformerschaltung ist wiederum dafür eingerichtet, sowohl das erste Schwingungsmeßsignal vom ersten Schwingungssensor als auch das zweite Schwingungsmeßsignal vom zweiten Schwingungssensor zu empfangen und zu verarbeiten, nämlich einen Massenstrom des durch die ersten und zweiten Rohre strömenden Meßstoffs repräsentierende erste Teil-Massenstrom-Meßwerte zu ermitteln. Darüberhinaus ist die Meßumformerschaltung ferner eingerichtet, sowohl das dritte Schwingungsmeßsignal vom dritten Schwingungssensor als auch das vierte Schwingungsmeßsignal vom vierten Schwingungssensor zu empfangen und zu verarbeiten, nämlich einen Massenstrom des durch die dritten und vierten Rohre strömenden Meßstoffs repräsentierende zweite Teil-Massenstrom-Meßwerte zu ermitteln sowie anhand der ersten und zweite Teil-Massenstrom-Meßwerte einen Gesamt-Massenstrom des durch die ersten, zweiten, dritten und vierten Rohre strömenden Meßstoffs repräsentierende Gesamt-Durchfluß-Meßwerte zu ermitteln.

Beim vorbezeichneten Meßsystem müssen die Schwingungen demnach mit einer speziellen, nämlich alle vier Schwingungsmeßsignale gleichzeitig verarbeitende Meßumformerschaltung ausgewertet werden. Dies führt u.a. dazu, daß nämliche Meßumformerschaltung zum einen sehr aufwendig zu entwickeln und herzustellen ist, zum anderen aber bei einem sehr hohen Bauteileaufwand nur in sehr limitierten Auflage eingesetzt werden kann. Infolgedessen weist eine solche Meßumformerschaltung bzw. die damit gebildete Meß- und Betreibselektronik vergleichsweise hohe Grenzkosten auf. Darüberhinaus führt der Ausfall auch nur eines von vier Kanälen für die Schwingungsmeßsignale zu einem nur durch Auswechseln der gesamten Meßumformerschaltung zu behebenden Totalausfall der Meß- und Betriebselektronik bzw. des damit gebildeten Meßsystems.

Ausgehend vom vorbezeichneten Stand der Technik besteht eine Aufgabe der Erfindung darin, ein vibronisches Meßsystem dahingehend zu verbessern, daß dessen Meß- und Betriebelektronik zum einen eine separate Anregung von Schwingungen zweier Paare Rohre wie auch eine separate Auswertung zweier Paare von Schwingungssignalen ermöglicht und zum anderen einen einfacheren bzw. kostengünstigeren Aufbau aufweist.

Die Aufgabe wird erfindungsgemäß gelöst durch das Meßsystem gemäß dem unabhängigen Anspruch 1, nämlich durch ein vibronisches Meßsystem, wie z.B. ein Coriolis-Massendurchfluß-Meßgerät oder ein Coriolis-Massendurchfluß-/Dichte-Meßgerät, zum Messen und/oder Überwachen wenigstens eines, beispielsweise zeitlich veränderlichen, Strömungsparameters, beispielsweise eines Massenstrome, eines Volumenstroms und/oder einer Strömungsgeschwindigkeit, und/oder zum Messen und/oder Überwachen wenigstens eines, beispielsweise zeitlich veränderlichen, Stoffparameters, beispielsweise einer Dichte und/oder einer Viskosität, eines strömenden Meßstoffs, beispielsweise eines Gases, einer Flüssigkeit oder einer Dispersion,
welches Meßsystem einen Meßwandler mit einer Rohranordnung zum Führen des strömenden Fluids, mit einer Erregeranordnung zum Wandeln elektrischer Leistung in dem Anregen und Aufrechterhalten erzwungener mechanischer Schwingungen der Rohranordnung dienliche mechanische Leistung und mit einer Sensoranordnung zum Erfassen von mechanischen Schwingungen der Rohranordnung und zum Bereitstellen von jeweils Schwingungsbewegungen der Rohranordnung repräsentierenden Schwingungsmeßsignalen, umfaßt
und welches Meßsystem eine mit dem Meßwandler, nämlich sowohl mit dessen Erregeranordnung als auch mit dessen Sensoranordnung, beispielsweise mittels elektrischer Verbindungsleitungen, elektrisch gekoppelte Meß- und Betriebselektronik mit einer ersten Treiberschaltung zum Bereitstellen elektrischer Leistung für die Erregeranordnung, mit einer ersten Meßumformerschaltung zum Verarbeiten von Schwingungsmeßsignalen der Sensoranordnung und zum Ansteuern der ersten Treiberschaltung, mit einer zweiten Treiberschaltung zum Bereitstellen elektrischer Leistung für die Erregeranordnung, und mit einer zweiten Meßumformerschaltung zum Verarbeiten von Schwingungsmeßsignalen der Sensoranordnung und zum Ansteuern der zweiten Treiberschaltung umfaßt.

Die Rohranordnung des erfindungsgemäßen Meßsystems weist im besonderen einen, insb. als Leitungsverzweigung dienlichen und/oder einlaßseitigen, ersten Strömungsteiler mit, insb. genau, vier Strömungsöffnungen, einen, insb. dem ersten Strömungsteiler baugleichen und/oder als Leitungsvereinigung dienlichen und/oder auslaßseitigen, zweiten Strömungsteiler mit, insb. genau, vier Strömungsöffnungen, sowie vier lediglich paarweise baugleiche Rohre, nämlich ein, insb. zumindest abschnittsweise gekrümmtes, erstes Rohr, ein dem ersten Rohr baugleiches zweites Rohr ein, insb. zumindest abschnittsweise gekrümmtes, drittes Rohr sowie ein lediglich dem dritten Rohr baugleiches viertes Rohr auf. Jedes der ersten, zweiten, dritten und vierten Rohre der Rohranordnung erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer, insb. metallischen, Rohrwandung umschlossenes, sich jeweils vom jeweiligen ersten Ende des jeweiligen Rohrs bis zum jeweiligen zweiten Ende nämlichen Rohrs erstreckenden Lumen auf. Darüberhinaus ist jedes der ersten, zweiten, dritten und vierten Rohre der Rohranordnung jeweils an jeden der ersten und zweiten Strömungsteiler angeschlossen, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers, das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers münden, und ist jedes der ersten, zweiten, dritten und vierten Rohre der Rohranordnung jeweils eingerichtet, von Meßstoff durchströmt und währenddessen vibrieren gelassen zu werden.

Die Erregeranordnung des erfindungsgemäßen Meßsystems weist zwei, insb. elektrodynamische und/oder baugleiche, Schwingungserreger auf, von denen ein erster Schwingungserreger mechanisch mit sowohl dem ersten Rohr als auch dem zweiten Rohr sowie elektrisch, insb. lediglich, mit der ersten Treiberschaltung verbunden ist und ein zweiter Schwingungserreger mechanisch mit sowohl mit dem dritten Rohr als auch dem vierten Rohr sowie elektrisch, insb. lediglich, mit der zweiten Treiberschaltung verbunden ist, wobei jeder der ersten und zweiten Schwingungserreger jeweils eingerichtet ist, elektrische in mechanische Leistung zu wandeln.

Die erste Treiberschaltung wiederum ist eingerichtet, ein elektrisches erstes Treibersignal zu generieren und damit elektrische Leistung, insb. lediglich, in den ersten Schwingungserreger einzuspeisen, derart, daß die ersten und zweiten Rohre zumindest anteilig Nutzschwingungen, nämlich gegengleiche erzwungene mechanische Schwingungen mit wenigstens einer ersten Nutzfrequenz, nämlich einer durch das erste Treibersignal vorgegebenen, insb. einer ersten Resonanzfrequenz der Rohranordnung entsprechenden, Schwingungsfrequenz ausführen, die geeignet sind, im durch die ersten und zweiten Rohre jeweils hindurchströmenden Meßstoff vom Massenstrom abhängige Corioliskräfte zu bewirken,
und die zweite Treiberschaltung ist eingerichtet, ein elektrisches zweites Treibersignal zu generieren und damit elektrische Leistung, insb. lediglich, in den zweiten Schwingungserreger einzuspeisen, derart, daß die dritten und vierten Rohre zumindest anteilig Nutzschwingungen, nämlich gegengleiche erzwungene mechanische Schwingungen mit wenigstens einer zweiten Nutzfrequenz, nämlich einer durch das zweite Treibersignal vorgegebenen, insb. einer zweiten Resonanzfrequenz der Rohranordnung entsprechenden, Schwingungsfrequenz ausführen, die geeignet sind, im durch die dritten und vierten Rohre jeweils hindurchströmenden Meßstoff vom Massenstrom abhängige Corioliskräfte zu bewirken.

Die Sensoranordnung weist vier, insb. elektrodynamische und/oder baugleiche und/oder voneinander beabstandete, Schwingungssensoren auf, von denen ein erster Schwingungssensor und ein zweiter Schwingungssensor mechanisch jeweils mit sowohl dem ersten Rohr als auch dem zweiten Rohr sowie elektrisch jeweils, insb. lediglich, mit der ersten Meßumformerschaltung verbunden sind und ein dritter Schwingungssensor und ein vierter Schwingungssensor mechanisch jeweils mit sowohl dem dritten Rohr als auch dem vierten Rohr sowie elektrisch jeweils, insb. lediglich, mit der zweiten Meßumformerschaltung verbunden sind. Jeder der ersten, zweiten, dritten und vierten Schwingungssensoren ist im besonderen jeweils dafür eingerichtet, Schwingungsbewegungen der damit mechanische verbundenen ersten, zweiten, dritten bzw. vierten Rohre zu erfassen und ein nämliche Schwingungsbewegungen repräsentierendes, insb. elektrisches, erstes, zweites, drittes bzw. viertes Schwingungsmeßsignal bereitzustellen.

Die erste Meßumformerschaltung wiederum ist dafür eingerichtet, sowohl das erste Schwingungsmeßsignal vom ersten Schwingungssensor als auch das zweite Schwingungsmeßsignal vom zweiten Schwingungssensor zu empfangen und zu verarbeiten, nämlich einen Massenstrom des durch die ersten und zweiten Rohre strömenden Meßstoffs repräsentierende, insb. digitale, erste Teil-Massenstrom-Meßwerte zu ermitteln und an die zweite Meßumformerschaltung auszugeben,

und die zweite Meßumformerschaltung ist dafür eingerichtet, sowohl das dritte Schwingungsmeßsignal vom dritten Schwingungssensor als auch das vierte Schwingungsmeßsignal vom vierten Schwingungssensor wie auch von der ersten Meßumformerschaltung ausgegebene erste Teil-Massenstrom-Meßwerte zu empfangen und zu verarbeiten, nämlich einen Gesamt-Massenstrom des durch die ersten, zweiten, dritten und vierten Rohre strömenden Meßstoffs repräsentierende, insb. digitale, Gesamt-Durchfluß-Meßwerte zu ermitteln.

Nach einer ersten Ausgestaltung der Erfindung ist ferner vorgesehen, daß die erste Treiberschaltung, beispielsweise über einen Datenbus, elektrisch mit der ersten Meßumformerschaltung, beispielsweise aber nicht mit der zweiten Meßumformerschaltung elektrisch verbunden ist.

Nach einer zweiten Ausgestaltung der Erfindung ist ferner vorgesehen, daß die zweite Treiberschaltung, beispielsweise über einen Datenbus, elektrisch mit der zweiten Meßumformerschaltung, beispielsweise aber nicht mit der ersten Meßumformerschaltung elektrisch verbunden ist.

Nach einer dritten Ausgestaltung der Erfindung ist ferner vorgesehen, daß die erste Meßumformerschaltung und die zweite Meßumformerschaltung, beispielsweise über einen Datenbus, miteinander elektrisch verbunden sind.

Nach einer vierten Ausgestaltung der Erfindung ist ferner vorgesehen, daß die erste Meßumformerschaltung mittels eines ersten Mikroprozessors gebildet ist. Diese Ausgestaltung weiterbildend ist ferner vorgesehen, daß die zweite Meßumformerschaltung mittels eines zweiten Mikroprozessors gebildet ist.

Nach einer fünften Ausgestaltung der Erfindung ist ferner vorgesehen, daß die zweite Meßumformerschaltung dafür eingerichtet ist, unter Verwendung der dritten und vierten Schwingungsmeßsignale einen Massenstrom des durch die dritten und vierten Rohre strömenden Meßstoffs repräsentierende, beispielsweise nämlich digitale, zweite Teil-Massenstrom-Meßwerte zu ermitteln. Diese Ausgestaltung weiterbildend ist ferner vorgesehen, daß die zweite Meßumformerschaltung dafür eingerichtet ist, die Gesamt-Durchfluß-Meßwerte unter Verwendung auch von zweiten Teil-Massenstrom-Meßwerten zu ermitteln.

Nach einer sechsten Ausgestaltung der Erfindung ist ferner vorgesehen, daß die Sensoranordnung wenigstens zwei, insb. baugleiche und/oder voneinander beabstandete, Temperatursensoren aufweist, von denen ein erster Temperatursensor mechanisch mit einem der ersten, zweiten, dritten und vierten Rohre, insb. nämlich mit dem ersten Rohr oder mit dem zweiten Rohr, sowie elektrisch jeweils, insb. lediglich, mit der zweiten Meßumformerschaltung verbunden ist, und ein zweiter Temperatursensor mechanisch mit einem der ersten, zweiten, dritten und vierten Rohre, insb. nämlich demselben Rohr wie der erste Temperatursensor, sowie elektrisch jeweils, insb. lediglich, mit der zweiten Meßumformerschaltung verbunden ist, und daß jeder der ersten und zweiten Temperatursensoren jeweils eingerichtet ist, eine Temperatur des damit mechanisch verbundenen ersten, zweiten, dritten bzw. vierten Rohrs zu erfassen und ein nämliche Temperatur repräsentierendes, insb. elektrisches, erstes bzw. zweites Temperaturmeßsignal bereitzustellen. Diese Ausgestaltung der Erfindung weiterbildend ist die zweite Meßumformerschaltung ferner dafür eingerichtet, das erste Temperaturmeßsignal vom ersten Temperatursensor zu empfangen und zu verarbeiten, nämlich die mit dem ersten Temperatursensor erfaßte Temperatur oder eine davon abhängige Temperatur repräsentierende, insb. digitale, erste Temperatur-Meßwerte zu ermitteln. Zudem kann die die zweite Meßumformerschaltung dafür eingerichtet sein, das zweite Temperaturmeßsignal vom zweiten Temperatursensor zu empfangen und zu verarbeiten, nämlich die mit dem zweiten Temperatursensor erfaßte Temperatur oder eine davon abhängige Temperatur repräsentierende, insb. digitale, zweite Temperatur-Meßwerte zu ermitteln, beispielsweise um die Gesamt-Massenstrom-Meßwerte auch unter Verwendung der ersten und zweiten Temperatur-Meßwerte zu ermitteln. Alternativ oder in Ergänzung kannn die zweite Meßumformerschaltung auch dafür eingerichtet sein, zumindest die ersten Temperatur-Meßwerte, beispielsweise nämlich die ersten und zweiten Temperatur-Meßwerte, an die erste Meßumformerschaltung auszugeben, und kann die erste Meßumformerschaltung dann auch dafür eingerichtet sein, von der ersten Meßumformerschaltung ausgegebene Temperatur-Meßwerte zu empfangen und auszuwerten, beispielsweise nämlich die ersten Teil-Massenstrom-Meßwerte und/oder die ersten Teil-Dichte-Meßwerte auch unter Verwendung zumindest der ersten Temperatur-Meßwerte zu ermitteln.

Nach einer siebenten Ausgestaltung der Erfindung ist ferner vorgesehen, daß die erste Meßumformerschaltung dafür eingerichtet ist, basierend auf wenigstens einem der ersten und zweiten Schwingungsmeßsignale eine Dichte des durch die ersten und zweiten Rohre strömenden Meßstoffs repräsentierende, insb. digitale, erste Teil-Dichte-Meßwerte zu ermitteln und an die zweite Meßumformerschaltung auszugeben. Diese Ausgestaltung der Erfindung weiterbildend ist die zweite Meßumformerschaltung zudem dafür eingerichtet, von der ersten Meßumformerschaltung ausgegebene erste Teil-Dichte-Meßwerte zu empfangen und basierend auf ersten Teil-Dichte-Meßwerten sowie wenigstens einem der dritten und vierten Schwingungsmeßsignale eine Dichte des durch die ersten, zweiten, dritten und vierten Rohre strömenden Meßstoffs repräsentierende, insb. digitale, Gesamt-Dichte-Meßwerte zu ermitteln.

Nach einer achten Ausgestaltung der Erfindung ist die zweite Meßumformerschaltung dafür eingerichtet, basierend auf wenigstens einem der dritten und vierten Schwingungsmeßsignale eine Dichte des durch die dritten und vierten Rohre strömenden Meßstoffs repräsentierende, insb. digitale, zweite Teil-Dichte-Meßwerte zu ermitteln. Diese Ausgestaltung der Erfindung weiterbildend ist die erste Meßumformerschaltung ferner dafür eingerichtet, basierend auf wenigstens einem der ersten und zweiten Schwingungsmeßsignale eine Dichte des durch die ersten und zweiten Rohre strömenden Meßstoffs repräsentierende, insb. digitale, erste Teil-Dichte-Meßwerte zu ermitteln und an die zweite Meßumformerschaltung auszugeben und ist die zweite Meßumformerschaltung dafür eingerichtet, von der ersten Meßumformerschaltung ausgegebene erste Teil-Dichte-Meßwerte zu empfangen und basierend auf ersten und zweiten Teil-Dichte-Meßwerten eine, insb. mittlere, Dichte des durch die ersten, zweiten, dritten und vierten Rohre strömenden Meßstoffs repräsentierende, insb. digitale, Gesamt-Dichte-Meßwerte zu ermitteln.

Nach einer ersten Weiterbildung der Erfindung umfaßt das Meßsystem weiters: ein die ersten, zweiten, dritten und vierten Rohre umhüllendes Wandlergehäuse, wobei das Wandlergehäuse zumindest eine, insb. hermetisch geschlossene, Kavität aufweist und wobei jedes der ersten, zweiten, dritten und vierten Rohre innerhalb nämlicher Kavität angeordnet ist. Diese Ausgestaltung der Erfindung weiterbildend ist ferner vorgesehen, daß die Sensoranordnung wenigstens einen dritten Temperatursensor aufweist und daß der dritte Temperatursensor mechanisch mit Wandlergehäuse sowie elektrisch, insb. lediglich, mit der zweiten Meßumformerschaltung verbunden und dafür eingerichtet ist, eine Temperatur des Wandlergehäuses zu erfassen und ein nämliche Temperatur repräsentierendes, insb. elektrisches, drittes Temperaturmeßsignal bereitzustellen. Ferner kann die zweite Meßumformerschaltung dafür eingerichtet sein, das dritte Temperaturmeßsignal vom dritten Temperatursensor zu empfangen und zu verarbeiten, nämlich die mit dem dritten Temperatursensor erfaßte Temperatur oder eine davon abhängige Temperatur repräsentierende, insb. digitale, dritte Temperatur-Meßwerte zu ermitteln, beispielsweise um die Gesamt-Massenstrom-Meßwerte auch unter Verwendung der dritten Temperatur-Meßwerte zu ermitteln. Alternativ oder in Ergänzung kann die zweite Meßumformerschaltung auch eingerichtet sein, die dritten Temperatur-Meßwerte an die erste Meßumformerschaltung auszugeben, und kann die erste Meßumformerschaltung dann eingerichtet sein, die dritten Temperatur-Meßwerte zu empfangen und auszuwerten, nämlich die ersten Massenstrom-Meßwerte auch unter Verwendung der dritten Temperatur-Meßwerte zu ermitteln.

Nach einer zweiten Weiterbildung der Erfindung umfaßt das Meßsystem weiters: ein, insb. explosions- bzw. druckfesten, Elektronik-Schutzgehäuse, wobei beispielsweise sowohl die ersten und zweiten Treiberschaltungen als auch die ersten und zweiten Meßumformerschaltungen, insb. zumindest gegen Spritzwasser geschützt, in nämlichem Elektronik-Schutzgehäuse untergebracht sind.

Nach einer dritten Weiterbildung der Erfindung umfaßt die Meß- und Betriebselektronik weiters: eine - beispielsweise zusammen mit den ersten und zweiten Treiberschaltungen sowie den ersten und zweiten Meßumformerschaltungen in einem Elektronik-Schutzgehäuse des Meßsystems untergebrachte - Schnittstellenschaltung zur Ausgabe von, insb. digitalen und/oder mittels der zweiten Meßumformerschaltung ermittelten, Meßwerten.

Nach einer ersten Ausgestaltung der dritten Weiterbildung der Erfindung ist vorgesehen, daß die Schnittstellenschaltung elektrisch mit der zweiten Meßumformerschaltung, beispielsweise aber nicht mit der ersten Meßumformerschaltung elektrisch verbunden ist.

Nach einer zweiten Ausgestaltung der dritten Weiterbildung der Erfindung ist die zweite Meßumformerschaltung eingerichtet, damit ermittelte Gesamt-Durchfluß-Meßwerte an die Schnittstellenschaltung auszugeben, und ist die Schnittstellenschaltung eingerichtet, von der zweiten Meßumformerschaltung ausgegebene Gesamt-Massenstrom-Meßwerte zu empfangen und in ein nämliche Gesamt-Massenstrom-Meßwerte bereitstellendes, beispielsweise auch zu einem Industriestandard konformes, Massenstrom-Ausgabesignal zu wandeln.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1, 2A, 2B: in verschieden, teilweise auch geschnitten und/oder auch perspektivischen, Seitenansichten ein vibronisches Meßsystem;
- Fig. 3A, 3B: in verschieden, teilweise auch geschnitten und/oder auch perspektivischen, Seitenansichten einen für ein vibronisches Meßsystem gemäß Fig. 1, 2A bzw. 2B geeigneten Meßwandler;
- Fig. 4A, 4B: in zwei Seitenansichten eine Rohranordnung eines Meßwandlers gemäß Fig. 3A, 3B;
- Fig. 5A, 5B: in zwei weiteren Seitenansichten die Rohranordnung eines Meßwandlers gemäß Fig. 4A und 4B;
- Fig. 6: schematisch nach Art eines Blockdiagramms eine für ein vibronisches Meßsystem gemäß Fig. 1, 2A bzw. 2B geeigneten Meß- und Betriebselektronik; und
- Fig. 7: schematisch nach Art eines Blockdiagramms eine weitere Variante einer für ein vibronisches Meßsystem gemäß Fig. 1, 2A bzw. 2B geeigneten Meß- und Betriebselektronik.

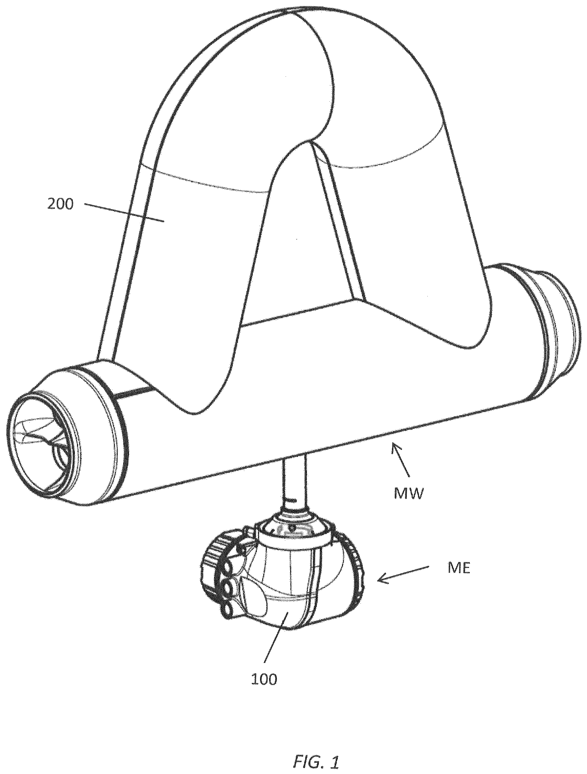

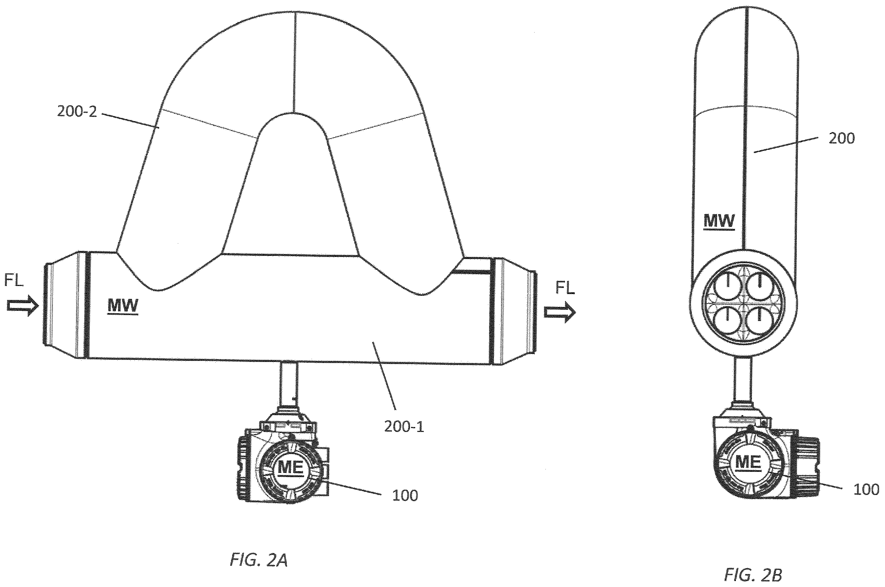

In Fig. 1, 2A und 2B, sind Ausführungsbeispiele bzw. Ausgestaltungvarianten für ein dem Messen und/oder Überwachen wenigstens eines, insb. zeitlich veränderlichen, Strömungsparameters, beispielsweise einem Massenstrom, einem Volumenstrom und/oder einer Strömungsgeschwindigkeit, und/oder zum Messen und/oder Überwachen wenigstens eines, insb. zeitlich veränderlichen, Stoffparameters, beispielsweise einer Dichte und/oder einer Viskosität, eines zumindest zeitweise strömenden Fluids FL dienliches vibronisches Meßsystems schematisch dargestellt. Das Meßsystem ist im besonderen dafür vorgesehen bzw. eingerichtet, in den Verlauf einer das als Meßstoff dienliche Fluid FL - beispielsweise nämlich ein Gas, eine Flüssigkeit oder eine Dispersion - führenden und/oder als Rohrleitung ausgebildeten Prozeßleitung eingegliedert und im Betrieb von dem via Prozeßleitung zu- bzw. wieder abgeführten Fluid FL zumindest zeitweise durchströmt zu werden.

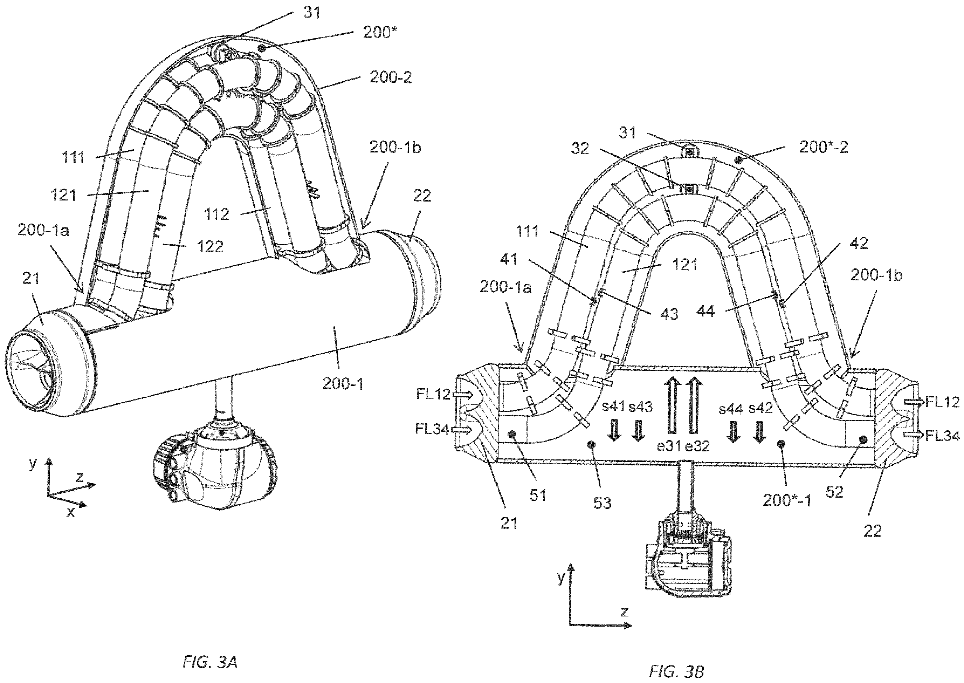

Wie in Fig. 3A, 3B dargestellt bzw. aus einer Zusammenschau der Fig. 1, 2A, 2B, 3A und 3B ohne weiters ersichtlich, umfaßt das Meßsystem einen Meßwandler MW mit einer mittels vier - beispielsweise zwecks Bereitstellung von parallelen Strömungspfaden mit voneinander abweichendem Strömungswiderständen - lediglich paarweise baugleichen Rohren (111, 121, 112, 122) sowie zwei daran jeweils angeschlossener Strömungsteiler (21, 22) gebildete Rohranordnung, eine Erregeranordnung (31, 32) zum Wandeln elektrischer Leistung in dem Anregen und Aufrechterhalten erzwungener mechanischer Schwingungen der Rohre sowie eine Sensoranordnung (41, 42, 43, 44) zum Erfassen von mechanischen Schwingungen der Rohranordnung und zum Bereitstellen von jeweils Schwingungsbewegungen der Rohranordnung, insb. nämlich von deren Rohren, repräsentierenden Schwingungsmeßsignalen. Zudem kann im Meßwandler beispielsweise auch eine dem Erfassen von Temperaturen innerhalb der Rohranordnung dienliche Temperaturmeßanordnung und/oder eine dem Erfassen von mechanischen Spannungen innerhalb der Rohranordnung dienliche Dehnungsmeßanordnung vorgesehen sein.

Die Rohranordnung weist nach einer weiteren Ausgestaltung der Erfindung ein gekrümmtes erstes Rohr 111, ein nämlichem Rohr 111 baugleiches gekrümmtes zweites Rohr 121, ein gekrümmtes drittes Rohr 112 sowie ein lediglich nämlichen Rohr 112, mithin weder dem Rohr 111 noch dem Rohr 121 baugleiches viertes Rohr 122 auf. Darüberhinaus weist die Rohranordnung - wie in den Fig. 2A, 2B, 3A, 3B, 4A, 4B, 5A bzw. 5B dargestellt bzw. aus deren Zusammenschau ohne weiteres ersichtlich - einen ersten Strömungsteiler 21 mit vier Strömungsöffnungen 21-1, 21-2, 21-3, 21-4 und einen, beispielsweise nämlichem Strömungsteiler 21 baugleichen, zweiten Strömungsteiler 22 mit gleichermaßen vier Strömungsöffnungen 22-1, 22-2, 22-3, 22-4 auf. Jedes der Rohre 111, 112, 121, 122 erstreckt sich jeweils von einem jeweiligen ersten Ende des jeweiligen Rohrs bis zu einem jeweiligen zweiten Ende nämlichen Rohrs mit einer jeweiligen Rohrlänge und weist jeweils ein von einer - beispielsweise metallischen - Rohrwandung umschlossenes, sich jeweils vom jeweiligen ersten Ende des jeweiligen Rohrs bis zum jeweiligen zweiten Ende nämlichen Rohrs erstreckenden Lumen auf. Darüberhinaus ist jedes der Rohre 111, 112, 121, 122 - wie auch in Fig. 3A und 3B gezeigt bzw. aus einer Zusammenschau der Fig. 2A, 2B, 3A, 3B, 4A und 4B ohne weiteres ersichtlich - jeweils an jeden der beiden Strömungsteiler 21, 22 angeschlossen, beispielsweise nämlich stoff-, kraft- und/oder formschlüssig damit verbunden, derart, daß das Rohr 111 mit dessen ersten Ende in eine erste Strömungsöffnung 21-1 des Strömungsteilers 21 und mit dessen zweiten Ende in eine erste Strömungsöffnung 22-1 des Strömungsteilers 22, das Rohr 121 mit dessen ersten Ende in eine zweite Strömungsöffnung 21-2 des Strömungsteilers 21 und mit dessen zweiten Ende in eine zweite Strömungsöffnung 22-2 des Strömungsteilers 22, das Rohr 112 mit dessen ersten Ende in eine dritte Strömungsöffnung 21-3 des Strömungsteilers 21 und mit dessen zweiten Ende in eine dritte Strömungsöffnung 22-3 des Strömungsteilers 22 und das Rohr 122 mit dessen ersten Ende in eine vierte Strömungsöffnung 21-4 des Strömungsteilers 21 und mit dessen zweiten Ende in eine vierte Strömungsöffnung 22-4 des Strömungsteilers 22 münden. Zudem ist jedes der Rohre 111, 112, 121, 122 der Rohranordnung jeweils eingerichtet, von Meßstoff durchströmt und währenddessen vibrieren gelassen zu werden. Wie aus der Zusammenschau der Fig. 2A, 2B, 3A, 3B, 4A und 4B ersichtlich kann der Strömungsteiler 21 in Strömungsrichtung des Fluids FL einlaßseitig angeordnet sein bzw. als Leitungsverzweigung dienen und kann der Strömungsteiler 22 entsprechend in Strömungsrichtung des Fluids FL auslaßseitig angeordnet sein bzw. als Leitungsvereinigung dienen. Gemäß einer weiteren Ausgestaltung der Erfindung ist ferner vorgesehen, daß die Rohranordnung genau vier Rohre, mithin außer den vorbezeichneten Rohren 111, 112, 121, 122 kein weiteres an den Strömungsteiler 21 und den Strömungsteiler 22 angeschlossenes Rohr aufweist. Die vorbezeichnete Rohrlänge entspricht hier einer gestreckten Länge bzw. einer Länge einer gedachten Mittellinie des jeweiligen Rohrs, wobei die Rohrlänge des Rohrs 111 gleich der Rohrlänge des Rohrs 121 bzw. die Rohrlänge des Rohrs 121 gleich der Rohrlänge des Rohrs 122 ist. Gemäß einer weiteren Ausgestaltung der Erfindung ist zudem die Rohrlänge des Rohrs 111 lediglich gleich der Rohrlänge des Rohrs 121, gleichwohl größer als die Rohrlänge sowohl des Rohrs 121 als auch des Rohrs 122, bzw. ist die Rohrlänge des Rohrs 121 lediglich gleich der Rohrlänge des Rohrs 122, gleichwohl kleiner als die Rohrlänge sowohl des Rohrs 111 als auch des Rohrs 112. Die Rohrwandung jedes der Rohre 111, 121, 112, 122 der Rohranordnung weist jeweils eine vorgegebene - beispielsweise auch im wesentlichen einheitliche - Wandstärke auf und kann - wie bei Rohranordnungen der in Rede stehenden Art bzw. damit gebildeten Meßwandlern bzw. Meßsystemen durchaus üblich - beispielsweise aus gleichem Material und/oder einem Metall, insb. nämlich jeweils einem Edelstahl oder jeweils einer Nickelbasislegierung, bestehen. Die Rohre 111, 121, 112, 122 können zudem beispielsweise jeweils einstückig ausgebildet, beispielsweise nämlich nahtlos oder zumindest im Falle einer Rohrwandung aus Metall mit einer geschweißten Naht hergestellt sein, und/oder jeweils durch Biegen eines rohrförmigen Halbzeugs geformt sein, beispielsweise derart, daß jedes der Rohre 111, 121, 112, 122 - wie auch in Fig. 2A, 2B, 3A und 3B jeweils angedeutet - im wesentlichen V-förmig ausgebildet ist bzw. eine V-förmige Silhouette aufweist und/oder daß jedes der Rohre im Ergebnis eine in einer einzigen (Biege-)Ebene liegende Rohrform aufweist. Nach einer weiteren Ausgestaltung der Erfindung weist jedes der Rohre jeweils ein Kaliber, nämlich einen Innendurchmesser auf, das nicht weniger als 20 mm, beispielsweise auch mehr als 40 mm beträgt und/oder das gleich ist dem Kaliber jedes der anderen der Rohre. Indem die beiden Rohre 111, 121 bzw. die beiden Rohre 121, 122 baugleich sind, ist das vorbezeichnete Kaliber des Rohrs 111 gleich dem Kaliber des Rohrs 121 bzw. ist das Kaliber des Rohrs 121 gleich dem Kaliber des Rohrs 122. Gemäß einer weiteren Ausgestaltung der Erfindung ist zudem das Kaliber jedes der Rohre 111, 112, 121, 122 gleich dem Kaliber jedes anderen der Rohre 111, 112, 121 bzw. 122 und/oder weist jedes der Rohre 111, 121, 112, 122 ferner jeweils ein Rohrlänge-zu Kaliber-Verhältnis, gemessen als ein Quotient der jeweiligen Rohrlänge zum jeweiligen Kaliber, auf, das größer als 25 (25:1), beispielsweise aber auch kleiner als 30(30:1) ist. Nach einer weiteren Ausgestaltung der Erfindung weist die Rohrwandung jedes der Rohre jeweils eine kleinste Wandstärke auf, die nicht weniger als 1 mm, beispielsweise auch mehr als 1,5 mm beträgt und/oder die gleich ist der kleinsten Wandstärke der Rohrwandung jedes der anderen der Rohre. Indem die beiden Rohre 111, 121 bzw. die beiden Rohre 121, 122 baugleich sind, ist die vorbezeichnete kleinste Wandstärke der Rohrwandung des Rohrs 111 gleich der kleinsten Wandstärke der Rohrwandung des Rohrs 121 bzw. ist die kleinste Wandstärke der Rohrwandung des Rohrs 121 gleich der kleinsten Wandstärke der Rohrwandung des Rohrs 122. Gemäß einer weiteren Ausgestaltung der Erfindung ist zudem die vorbezeichnete Wandstärke Rohrwandung jedes der Rohre 111, 112, 121, 122 gleich der kleinsten Wandstärke der Rohrwandung jedes anderen der Rohre 111, 112, 121 bzw. 122. Zum Verbinden der Rohranordnung bzw. des damit gebildeten Meßwandlers oder Meßsystems mit der vorbezeichneten, das Fluid FL führenden Prozeßleitung können zudem der Strömungsteiler 21 einen - beispielsweise dem Anschluß der Rohranordnung an ein im Betrieb das Fluid FL zuführendes Leitungssegment nämlicher Prozeßleitung dienlichen - ersten Anschlußflansch und der Strömungsteiler 22 einen - beispielsweise dem Anschluß der Rohranordnung an ein das Fluid FL wieder abführendes Leitungssegment der Prozeßleitung dienlichen - zweiten Anschlußflansch aufweisen. An jedem der vorbezeichneten Anschlußflansche kann beispielsweise jeweils eine Dichtfläche zum fluiddichten bzw. leckagefreien Verbinden der Rohranordnung mit dem jeweils korrespondierenden Leitungssegment der Prozeßleitung ausgebildet sein. Jede der beiden Dichtflächen kann jeweils einen eine Nennweite des Meßwandlers definierenden kleinsten Durchmesser aufweisen, der mehr als 100 mm beträgt, und/oder einen - hier eine Einbaulänge der Rohranordnung bzw. des damit gebildeten Meßwandlers definierenden - kleinsten Abstand zur jeweils anderen der Dichtflächen aufweisen, der mehr als 1000 mm und/oder weniger als 3000 mm beträgt.

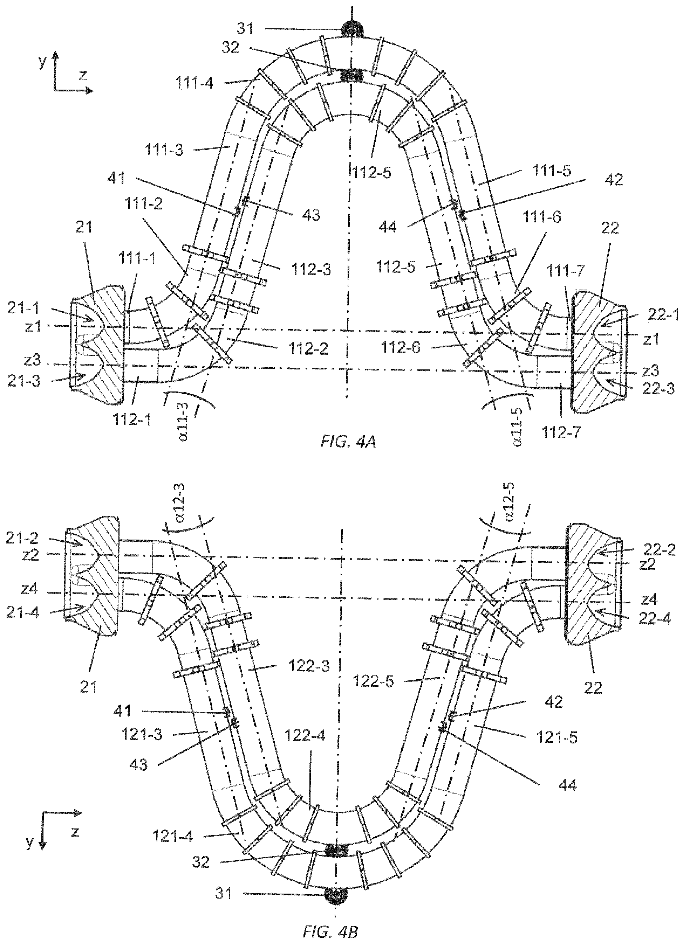

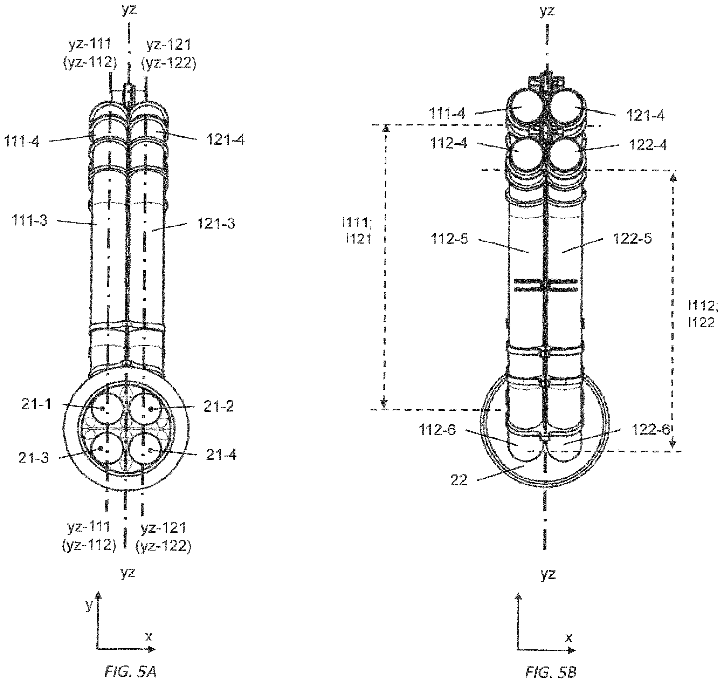

Die Rohre 111, 121, 112, 122 und die Strömungsteiler 21, 22 sind nach einer weiteren Ausgestaltung der Erfindung ferner so ausgebildet und angeordnet, daß die Rohranordnung, wie auch in Fig. 4A bzw. 4B schematisch dargestellt, eine erste gedachte Verbindungsachse z1, die einen Mittelpunkt der Strömungsöffnung 21-1 und einen Mittelpunkt der Strömungsöffnung 22-1 imaginär miteinander verbindet, eine zweite gedachte Verbindungsachse z2, die einen Mittelpunkt der Strömungsöffnung 21-2 und einen Mittelpunkt der Strömungsöffnung 22-2 imaginär miteinander verbindet, eine dritte gedachte Verbindungsachse z3, die einen Mittelpunkt der Strömungsöffnung 21-3 und einen Mittelpunkt der Strömungsöffnung 22-3 imaginär miteinander verbindet sowie eine vierte gedachte Verbindungsachse z4, die einen Mittelpunkt der Strömungsöffnung 21-4 und einen Mittelpunkt der Strömungsöffnung 22-4 imaginär miteinander verbindet, aufweist, derart, daß jede vorbezeichneten gedachten Verbindungsachsen z1, z2, z3, z4 jeweils parallel zu jeder anderen nämlicher Verbindungsachsen z1, z2, z3 bzw. z4 verläuft. Nach einer weiteren Ausgestaltung der Erfindung ist - wie auch aus Fig. 4A, 4B, 5A bzw. 5B ohne weiteres ersichtlich - jedes der Rohre 111, 112, 121, 122 so geformt, daß es jeweils eine, beispielsweise nämlich einer jeweilige gedachte Längsschnittebene entsprechende, erste gedachte Symmetrieebene yz-111, yz-121, yz-112 bzw. yz-122 sowie eine dazu senkrechte, beispielsweise nämlich einer jeweiligen gedachten Querschnittebene entsprechende, zweite gedachte Symmetrieebene xy-111, xy-121, xy-112 bzw. xy-122 aufweist und daß es jeweils sowohl zur zugehörigen ersten Symmetrieebene als auch zur zugehörigen zweiten Symmetrieebene spiegelsymmetrisch ist. Die Rohre 111, 121, 112, 122 und die Strömungsteiler 21, 22 können ferner so ausgebildet und angeordnet sein, daß sowohl die gedachte Symmetrieebene yz-111 parallel zur gedachten Symmetrieebene yz-121 als auch die gedachte Symmetrieebene yz-112 parallel zur gedachten Symmetrieebene yz-122 verläuft und/oder daß sowohl die gedachte Symmetrieebene yz-111 koinzident mit der gedachten Symmetrieebene yz-112 als auch die gedachte Symmetrieebene yz-121 koinzident mit der gedachten Symmetrieebene yz-122 ist. Nach einer weiteren Ausgestaltung sind die Rohre 111, 121, 112, 122 und die Strömungsteiler 21, 22 ferner so ausgebildet und angeordnet, daß die Rohranordnung zumindest eine sowohl zwischen dem Rohr 111 und dem Rohr 121 als auch zwischen dem Rohr 112 und dem Rohr 122 verortete erste gedachte Symmetrieebene yz aufweist, bezüglich der die Rohranordnung, wie auch aus Fig. 5A ohne weiteres ersichtlich, spiegelsymmetrisch ist. Die Rohranordnung kann - wie auch aus einer Zusammenschau der Fig. 4A, 4B, 5A und 5B ohne weiteres ersichtlich - ferner so ausgebildet sein, daß deren erste Symmetrieebene yz beispielsweise parallel zu jeder der vorbezeichneten Symmetrieebenen yz-111, yz-121, yz-112, yz-122 der Rohre 111, 121, 112 bzw. 122 ausgerichtet und/oder jeweils im gleichen Abstand zu jeder der vorbezeichneten Symmetrieebenen yz-111, yz-121, yz-112, yz-122 der Rohre 111, 121, 112 bzw. 122 angeordnet ist; dies beispielsweise auch derart, daß die beiden Rohre 111, 121 jeweils zueinander bzw. zur vorbezeichneten gedachten Symmetrieebene yz der Rohranordnung und die beiden Rohre 112, 122 jeweils zueinander bzw. zur gedachten Symmetrieebene yz der Rohranordnung parallel sind und/oder daß die beiden Rohre 111, 121 in einer gemeinsamen ersten Rohrebene liegen und die Rohre 121, 122 in einer gemeinsamen zweiten Rohrebene liegen. Dementsprechend weist nach einer weiteren Ausgestaltung der Erfindung das Rohr 111 zur gedachten Symmetrieebene yz der Rohranordnung einen kleinsten Abstand auf, der gleich einem kleinsten Abstand ist, den das Rohr 112 zur nämlicher gedachten Symmetrieebene yz aufweist und/oder weist das Rohr 121 zur gedachten Symmetrieebene yz der Rohranordnung einen kleinsten Abstand auf, der gleich einem kleinsten Abstand ist, den das Rohr 122 zu nämlicher gedachten Symmetrieebene yz aufweist. Nach einer weiteren Ausgestaltung der Erfindung ist ferner vorgesehen, daß die Rohranordnung außer der vorbezeichneten ersten gedachten Symmetrieebene yz eine dazu senkrechte, gleichwohl jedes der Rohre imaginär schneidende zweite gedachte Symmetrieebene xy aufweist und auch bezüglich nämlicher zweiten gedachten Symmetrieebene xy spiegelsymmetrisch ist.

Jedes der Rohre 111, 121, 112, 122 der Rohranordnung ist ferner jeweils dafür eingerichtet, in dessen jeweiligen Lumen Fluid, insb. nämlich jeweils ein Teilvolumen des zu messenden Fluids FL, zu führen und währenddessen vibrieren gelassen zu werden, beispielsweise nämlich jeweils - insb. einen mit der wenigstens einen Meßgröße korrespondierenden Meßeffekt bewirkende und/oder mittels der Erregeranordnung angeregte - erzwungene mechanische Schwingungen um eine jeweils zughörige statische Ruhelage auszuführen; dies im besonderen in der Weise, daß jedes der Rohre der Rohranordnung vibrieren gelassenen und währenddessen ausgehend von dessen jeweiligen ersten Ende in Richtung von dessen jeweiligen zweiten Ende von Fluid durchströmt wird. Die vorbezeichneten erzwungenen mechanischen Schwingungen können, wie bei Meßwandlern der in Rede stehenden Art durchaus üblich, zumindest anteilig erzwungene Biegeschwingungen der Rohre um eine jeweilige gedachte, nämlich das jeweiligen Rohr imaginär schneidende Schwingungsachse der Rohranordnung sein; dies im besonderen auch in der Weise, daß die vorbezeichneten (vier) gedachten Schwingungsachsen - beispielsweise bei in statischer Ruhelage befindlichen Rohren - zueinander und/oder zu den vorbezeichneten gedachten Verbindungsachsen z1, z2, z3, z4 im wesentlichen parallel sind.

Die Erregeranordnung ist im besonderen dafür vorgesehen bzw. eingerichtet, dorthin eingespeiste elektrische Leistung in mechanische Leistung zu wandeln, derart, daß die Rohranordnung, insb. nämlich jedes von deren Rohren zumindest zeitweise, erzwungene mechanische Schwingungen um eine statische Ruhelage ausführt, während die Sensoranordnung dafür vorgesehen bzw. eingerichtet ist, mechanische Schwingungen der Rohranordnung, nicht zuletzt mittels der Erregeranordnung erzwungene mechanische Schwingungen und/oder Biegeschwingungen der Rohre, zu erfassen und ein erstes Schwingungsmeßsignal s41, ein zweites Schwingungsmeßsignal s42, ein drittes Schwingungsmeßsignal s43 sowie ein viertes Schwingungsmeßsignal s44 bereitzustellen, von welchen - beispielsweise elektrischen - Schwingungsmeßsignalen s41, s42, s43, s44 jedes zumindest anteilig Schwingungsbewegungen eines oder mehrerer der Rohre 111, 121, 112, 122 der Rohranordnung repräsentiert, beispielsweise jeweils mittels einer jeweiligen, mit Schwingungsbewegungen der Rohre korrespondierenden veränderlichen elektrischen Spannung; dies im besonderen in der Weise, daß die ersten und zweiten Schwingungsmeßsignale s41, s42 einer Änderung einer Massenstrom des in der Rohranordnung geführten Meßstoffs mit einer Änderung einer ersten Phasendifferenz Δφ12, nämlich einer Änderung einer Differenz zwischen einem Phasenwinkel des Schwingungsmeßsignals s41 und einem Phasenwinkel des Schwingungsmeßsignals s42 folgen und daß die dritten und vierten Schwingungsmeßsignale s43, s44 einer Änderung eines Massenstroms des in der Rohranordnung geführten Meßstoffs mit einer Änderung einer zweiten Phasendifferenz Δφ34, nämlich einer Änderung einer Differenz zwischen einem Phasenwinkel des Schwingungsmeßsignals s43 und einem Phasenwinkel des Schwingungsmeßsignals s44 folgen, und/oder in der Weise, daß jedes der vorbezeichneten Schwingungsmeßsignale s41, s42, s43, s44 einer Änderung einer Dichte des in der Rohranordnung geführten Meßstoffs jeweilis mit einer Änderung einer jeweiligen Signalfrequenz wenigstens einer spektrale Signalkomponente folgt. Zum Anregen und Aufrechterhalten von erzwungen mechanischen Schwingungen der Rohre weist die Erregeranordnung einen - beispielsweise elektrodynamischen - ersten Schwingungserreger 31 sowie wenigstens einen - beispielsweise elektrodynamischen und/oder zum ersten Schwingungserreger 31 baugleichen - zweiten Schwingungserreger 32 auf, wobei der Schwingungserreger 31 mit jedem der beiden Rohre 111, 121 und der Schwingungserreger 32 mit jedem der beiden Rohre 112, 122 mechanischen verbunden ist. Jeder der beiden Schwingungserrerger 31, 32 ist gemäß einer Ausgestaltung der Erfindung ferner dafür vorgesehen bzw. eingerichtet, von der Meß- und Betriebselektronik ME eingespeiste elektrische Leistung in mechanische Leistung, insb. nämlich in erzwungene mechanische Schwingungen der mit dem jeweiligen Schwingungserreger 31 bzw. 32 jeweils verbundenen Rohre 111, 121 bzw. 112, 122 bewirkende mechanische Leistung, zu wandeln; dies im besonderen in der Weise, daß der Schwingungserreger 31 differenziell auf die die beiden Rohre 111, 121 wirkt, nämlich lediglich gegengleiche Anregungskräfte in die beiden Rohre 111, 121 einleiten kann bzw. einleitet, und daß der Schwingungserreger 32 differenziell auf die beiden Rohre 112, 122 wirkt, nämlich lediglich gegengleiche Anregungskräfte in die beiden Rohre 112, 122 einleiten kann bzw. einleitet.

Zum Erzeugen der vorbezeichneten Schwingungsmeßsignale s41, s42, s43, s44 weist die Sensoranordnung einen, beispielsweise elektrodynamischen, ersten Schwingungssensor 41 für das Schwingungsmeßsignal s41, einen - beispielsweise elektrodynamischen und/oder zum ersten Schwingungssensor 41 baugleichen - zweiten Schwingungssensor 42 für das Schwingungsmeßsignal s42, einen - beispielsweise elektrodynamischen und/oder zum ersten Schwingungssensor 41 baugleichen - dritten Schwingungssensor für das Schwingungsmeßsignal s43 sowie wenigstens einen - beispielsweise elektrodynamischen und/oder zum dritten Schwingungssensor 43 baugleichen - vierten Schwingungssensor 44 für das Schwingungsmeßsignal s44 auf. Wie auch in Fig. 3A, 3B, 4A, und 4B angedeutet bzw. aus deren Zusammenschau ohne weiteres ersichtlich, ist sowohl der Schwingungssensor 41 als auch der Schwingungssensor 42 mit jedem der beiden Rohre 111, 121 mechanischen verbunden und ist sowohl der Schwingungssensor 43 als auch der Schwingungssensor 44 mit jedem der beiden Rohre 112, 122 mechanischen verbunden, beispielsweise derart, daß der Schwingungssensor 41 und der der Schwingungssensor 43 jeweils einlaßseitige Schwingungsbewegungen der Rohre 111, 121, 112 bzw. 122 erfassen und daß der Schwingungssensor 42 und der der Schwingungssensor 44 jeweils ausaßseitige Schwingungsbewegungen der Rohre 111, 121, 112 bzw. 122. Beispielsweise können die Schwingungssensoren auch in der Weise positioniert sein, daß der Schwingungssensor 41 gleichweit vom Strömungsteiler 21 beabstandet ist wie der Schwingungssensor 42 vom Strömungsteiler 22 und/oder daß der Schwingungssensor 43 gleichweit vom Strömungsteiler 21 beabstandet ist wie der Schwingungssensor 44 vom Strömungsteiler 22, und/oder in der Weise, daß die beiden Schwingungssensoren 41, 42 jeweils gleichweit vom vorbezeichneten Schwingungserreger 31 und/oder die beiden Schwingungssensoren 43, 44 jeweils gleichweit vom vorbezeichneten Schwingungserreger 32 positioniert sind. Gemäß einer weiteren Ausgestaltung der Erfindung ist jeder der vorbezeichneten Schwingungssensoren 41, 42 ferner dafür vorgesehen bzw. eingerichtet, entgegengesetzte, ggf. auch gegengleiche, Schwingungsbewegungen der Rohre 111, 121 zu erfasssen und in das (nämliche Schwingungsbewegungen jeweils repräsentierende) jeweilige Schwingungsmeßsignal s41, s42 zu wandeln und ist jeder der vorbezeichneten Schwingungssensoren 43, 44 ferner dafür vorgesehen bzw. eingerichtet, entgegengesetzte, ggf. auch gegengleiche, Schwingungsbewegungen der Rohre 112, 122 zu erfasssen und in das (nämliche Schwingungsbewegungen jeweils repräsentierende) jeweilige Schwingungsmeßsignal s43, s44 zu wandeln; dies im besonderen in der Weise, daß jeder der Schwingungssensoren 41, 42 die Schwingungsbewegungen der beiden Rohr 111, 121 differenziell erfaßt, nämlich lediglich entgegengesetzte Schwingungsbewegungen nämlicher Rohre 111, 121 in das jeweilige Schwingungsmeßsignal wandelt, und jeder der Schwingungssensoren 43, 44 die Schwingungsbewegungen der beiden Rohr 112, 122 differenziell erfaßt, nämlich lediglich entgegengesetzte Schwingungsbewegungen nämlicher Rohre 112, 122 in das jeweilige Schwingungsmeßsignal wandelt. Zur Verringerung der Anzahl an benötigten Verbindungsleitungen zur Meß- und Betriebselektronik ME können die beiden Schwingungssensoren 41, 43 elektrisch in Serie geschaltet sein, derart, daß die beiden Schwingungsmeßsignale s41, s43 einander überlagern, und/oder können die beiden Schwingungssensoren 42, 44 elektrisch in Serie geschaltet sein, derart, daß die beiden Schwingungsmeßsignale s42, s44 einander überlagern.

Nach einer weiteren Ausgestaltung der Erfindung ist ferner vorgesehen, daß - wie auch in Fig. 4A, 4B, 5A und 5B angedeutet - jedes der Rohre 111, 112, 121, 122 der Rohranordnung jeweils wenigstens ein mit dem Strömungsteiler 21, beispielsweise stoff- und/oder kraft- und/oder formschlüssig, verbundenes gerades, beispielsweise nämlich hohlzylindrisches, erstes Teilsegment 111-1, 121-1, 112-1 bzw. 122-1, ein an nämliches erstes Teilsegment 111-1, 121-1, 112-1 bzw. 122-1 anschließendes bogenförmiges, beispielsweise nämlich kreisbogenförmiges, zweites Teilsegment 111-2, 121-2, 112-2 bzw. 122-2, ein an nämliches zweites Teilsegment 111-2, 121-2, 112-2 bzw. 122-2 anschließendes gerades, beispielsweise nämlich hohlzylindrisches, drittes Teilsegment 111-3, 121-3, 112-3 bzw. 122-3, ein an nämliches drittes Teilsegment 111-3, 121-3, 112-3 bzw. 122-3 anschließendes bogenförmiges, beispielsweise nämlich kreisbogenförmiges, viertes Teilsegment 111-4, 121-4, 112-4 bzw. 122-4, ein an nämliches viertes Teilsegment 111-4, 121-4, 112-4 bzw. 122-4 anschließendes gerades, beispielsweise zum jeweiligen dritten Teilsegment 111-3, 121-3, 112-3 bzw. 122-3 baugleiches und/oder hohlzylindrisches, fünftes Teilsegment 111-5, 121-5, 112-5, 122-5, ein an nämliches fünftes Teilsegment 111-5, 121-5, 112-5 bzw. 122-5 anschließendes bogenförmiges, beispielsweise zum jeweiligen zweiten Teilsegment 111-2, 121-2, 112-2 bzw. 122-2 baugleiches und/oder kreisbogenförmiges, sechstes Teilsegment 111-6, 121-6, 112-6 bzw. 122-6 sowie ein sowohl an nämliches sechstes Teilsegment 111-6, 121-6, 112-6 bzw. 122-6 anschließendes als auch mit dem Strömungsteiler 22, beispielsweise stoff- und/oder kraft- und/oder formschlüssig, verbundenes bogenförmiges, beispielsweise zum jeweiligen ersten Teilsegment 111-1, 121-1, 112-1 bzw. 122-1 baugleiches und/oder hohlzylindrisches, siebentes Teilsegment 111-7, 121-7, 112-7 bzw. 122-7 aufweist. Für den vorbezeichneten Fall, daß die Rohranordnung sowohl die Symmetrieebene yz als auch die dazu senkrechte Symmetrieebene xy aufweist ist nach einer weiteren Ausgestaltung der Erfindung ferner vorgesehen, daß nämliche Symmetrieebene xy jedes der Rohre jeweils in dessen jeweiligen viertem Teilsegment 111-4, 121-4, 112-4 bzw. 122-4 imaginär schneidet. Nach einer weiteren Ausgestaltung der Erfindung weist jedes der Rohre, wie auch in Fig. 5B angedeutet bzw. auch aus einer Zusammenschau der Fig. 4A, 4B, 5A und 5B ohne weiteres ersichtlich, jeweils eine Rohrbogenhöhe h111, h121, h112, h122, gemessen innerhalb der vorbezeichneten Symmetrieebene xy als ein kleinster Abstand des jeweiligen vierten Teilsegments 111-4, 121-4, 112-4 bzw. 122-4 zur zugehörigen, nämlich dessen jeweilige ersten und zweiten Ende imaginär verbindenden gedachten Verbindungsachse z1, z2, z3 bzw. z4 auf, welche Rohrbogenhöhe jeweils so gewählt ist, daß jedes der Rohre 111, 121, 112, 122 jeweils ein Rohrlänge-zu-Rohrbogenhöhe-Verhältnis, gemessen als ein Quotient der Rohrlänge des jeweiligen Rohrs zur jeweiligen Rohrbogenhöhe, aufweist, das größer als 2 (2:1), beispielsweise größer als 2,5 (2,5:1), und kleiner als 4 (4:1), beispielsweise kleiner als 3 (3:1), ist, und/oder daß jedes der Rohre 111, 121, 112, 122 jeweils ein Kaliber-zu-Rohrbogenhöhe-Verhältnis, gemessen als ein Quotient des Kalibers des jeweiligen Rohrs zur jeweiligen Rohrbogenhöhe aufweist, das größer als 0,1, beispielsweise auch kleiner als 0,2 ist. Desweiteren kann - wie auch aus Fig. 4A bwz. 4B bzw. deren Zusammenschau ersichtlich - der Schwingungssensor 41 sowohl vom Teilsegment 111-2 als auch vom Teilsegment 111-4 beabstandet am Teilsegment 111-3 des Rohrs 111 sowie sowohl vom Teilsegment 121-2 als auch vom Teilsegment 121-4 beabstandet am Teilsegment 121-3 des Rohrs 121, der Schwingungssensor 42 sowohl vom Teilsegment 111-6 als auch vom Teilsegment 111-4 beabstandet am Teilsegment 111-5 des Rohrs 111 sowie sowohl vom Teilsegment 121-6 als auch vom Teilsegment 121-4 beabstandet am Teilsegment 121-5 des Rohrs 121, der Schwingungssensor 43 sowohl vom Teilsegment 112-2 als auch vom Teilsegment 112-4 beabstandet am Teilsegment 112-3 des Rohrs 112 sowie sowohl vom Teilsegment 122-2 als auch vom Teilsegment 122-4 beabstandet am Teilsegment 122-3 des Rohrs 122 bzw. der Schwingungssensor 44 sowohl vom Teilsegment 112-6 als auch vom Teilsegment 112-4 beabstandet am Teilsegment 112-5 des Rohrs 112 sowie sowohl vom Teilsegment 121-6 als auch vom Teilsegment 122-4 beabstandet am Teilsegment 122-5 des Rohrs 122 angebracht sein; dies beispielsweise auch derart, daß der Schwingungssensor 41 sowohl teilweise zwischen dem Teilsegment 111-3 und dem Teilsegment 112-3 als auch teilweise zwischen dem Teilsegment 121-3 und dem Teilsegment 122-3 und der Schwingungssensor 42 sowohl teilweise zwischen dem Teilsegment 111-5 und dem Teilsegment 112-5 als auch teilweise zwischen dem Teilsegment 121-5 und dem Teilsegment 122-5 positioniert ist und/oder daß der Schwingungssensor 43 sowohl teilweise zwischen dem Teilsegment 111-3 und dem Teilsegment 112-3 als auch teilweise zwischen dem Teilsegment 121-3 und dem Teilsegment 122-3 und der Schwingungssensor 44 sowohl teilweise zwischen dem Teilsegment 111-5 und dem Teilsegment 112-5 als auch teilweise zwischen dem Teilsegment 121-5 und dem Teilsegment 122-5 positioniert ist. Zudem können die Schwingungssensoren 41, 42 sowohl jeweils gleichweit vom Teilsegment 111-4 als auch jeweils gleichweit vom Teilsegment 121-4 beabstandet sein und/oder können die Schwingungssensoren 43, 44 sowohl jeweils gleichweit vom Teilsegment 112-4 als auch jeweils gleichweit vom Teilsegment 122-4 beabstandet sein. Alternativ oder in Ergänzung kann - wie auch aus Fig. 4A bzw. 4B bzw. deren Zusammenschau ersichtlich - der Schwingungserreger 31 sowohl vom Teilsegment 111-3 als auch vom Teilsegment 111-5 beabstandet am Teilsegment 111-4 des Rohrs 111 sowie sowohl vom Teilsegment 121-3 als auch vom Teilsegment 121-5 beabstandet am Teilsegment 121-4 des Rohrs 121-4 angebracht sein und kann der Schwingungserreger 32 sowohl vom Teilsegment 112-3 als auch vom Teilsegment 112-5 beabstandet am Teilsegment 112-4 des Rohrs 112 sowie sowohl vom Teilsegment 122-3 als auch vom Teilsegment 122-5 beabstandet am Teilsegment 122-4 des Rohrs 122 angebracht sein; dies beispielsweise auch derart, daß der Schwingungserreger 31 sowohl vom Teilsegment 111-3 und vom Teilsegment 111-5 des Rohrs 111 als auch vom Teilsegment 121-3 und vom Teilsegment 121-5 des Rohrs 121 jeweils gleichweit beabstandet ist und/oder daß der Schwingungserreger 32 sowohl vom Teilsegment 112-3 und vom Teilsegment 112-5 des Rohrs 112 als auch vom Teilsegment 122-3 und vom Teilsegment 122-5 des Rohrs 122 jeweils gleichweit beabstandet ist. Wie in Fig. 4A angedeutet, können die beiden Rohre 111, 112 ferner so ausgebildet und positioniert, daß eine gedachte Längsachse des geraden Teilsegments 111-3 des Rohrs 111 sowie eine gedachte Längsachse des geraden Teilsegments 112-3 des Rohrs 112 (zumindest in Projektion auf die vorbezeichnete - hier auch der Zeichenebene der Fig. 4A entsprechende - gedachte Symmetrieebene yz der Rohranordnung) in Verlängerung einen ersten Schnittwinkel α11-3 und eine gedachte Längsachse des geraden Teilsegments 111-5 des Rohrs 111 sowie eine gedachte Längsachse des geraden Teilsegments 112-5 des Rohrs 112 (zumindest in Projektion auf die vorbezeichnete gedachte Symmetrieebene yz der Rohranordnung) in Verlängerung einen zweiten Schnittwinkel α11-5 einschließen. Gleichermaßen können auch die beiden anderen beiden Rohre 121, 122 so ausgebildet sein, daß - wie in Fig. 4B angedeutet - eine gedachte Längsachse des Teilsegments 121-3 des Rohrs 121 sowie eine gedachte Längsachse des Teilsegments 122-3 des Rohrs 122 (zumindest in Projektion auf die vorbezeichnete - hier auch der Zeichenebene der Fig. 4B entsprechende - gedachte Symmetrieebene yz der Rohranordnung) in Verlängerung einen zweiten Schnittwinkel α12-3 und eine gedachte Längsachse des Teilsegments 121-5 des Rohrs 121 und eine gedachte Längsachse des Teilsegments 122-5 des Rohrs 122 (zumindest in Projektion auf die vorbezeichnete gedachte Symmetrieebene yz der Rohranordnung) in Verlängerung einen vierten Schnittwinkel α12-5 einschließen. Jeder der vorbezeichneten Schnittwinkel α11-3, α11-5, α12-3, α12-5 ist spitzwinklig, nämlich größer als 0° und kleiner als 90°. Zumindest die beiden Schnittwinkel α11-3, α11-5 können beispielsweise auch gleich groß sein. Alternativ oder in Ergänzung können auch die beiden Schnittwinkel α12-3, α12-5 gleich groß sein. Nach einer weiteren Ausgestaltung der Erfindung ist ferner vorgesehen, daß jeder der vorbezeichneten Schnittwinkel α11-3, α11-5, α12-3 und α12-5 jeweils größer als 0,1 - beispielsweise nämlich nicht kleiner als 0,2° - und kleiner als 10 - beispielsweise nämlich nicht größer als 5 - ist. Wie aus einer Zusammenschau der Fig. 4A, 4B ohne weiteres ersichtlich können die Rohre 111, 121, 112, 122 zudem auch so ausgebildet und angeordnet, daß ein kleinster Abstand Δ11-4 zwischen dem bogenförmigen Teilsegment 111-4 des Rohrs 111 und dem bogenförmigen Teilsegment 112-4 des Rohrs 112 sowohl größer als ein kleinster Abstand Δ11-3 zwischen dem geraden Teilsegment 111-3 des Rohrs 111 und dem bogenförmigen Teilsegment 112-2 des Rohrs 112 als auch größer als ein kleinster Abstand Δ11-5 zwischen dem geraden Teilsegment 111-5 des Rohrs 111 und dem bogenförmigen Teilsegment 112-6 des Rohrs 112 und ist gleichermaßen auch ein kleinster Abstand Δ12-4 zwischen dem bogenförmigen Teilsegment 121-4 des Rohrs 121 und dem bogenförmigen Teilsegment 122-4 des Rohrs 122 sowohl größer als ein kleinster Abstand Δ12-3 zwischen dem geraden Teilsegment 121-3 des Rohrs 121 und dem bogenförmigen Teilsegment 122-2 des Rohrs 122 als auch größer als ein kleinster Abstand Δ12-5 zwischen dem geraden Teilsegment 121-5 des Rohrs 121 und dem bogenförmigen Teilsegment 122-6 des Rohrs 122; dies beispielsweise auch derart, daß der Schwingungserreger 31 sowohl teilweise zwischen dem Teilsegment 111-4 des Rohrs 111 und dem Teilsegment 112-4 als auch teilweise zwischen dem Teilsegment 121-4 und dem Teilsegment 122-4 positioniert werden kann und/oder daß der Schwingungserreger 32 - wie auch in Fig. 4A bzw. 4B jeweils angedeutet- sowohl teilweise zwischen dem Teilsegment 111-4 und dem Teilsegment 112-4 als auch teilweise zwischen dem Teilsegment-121-4 und dem Teilsegment 122-4 positioniert werden kann.

Zum Schutz der Rohre der Rohranordnung sowie weiterer daran angebrachter Komponenten des Meßwandlers - nicht zuletzt den vorbezeichneten Schwingungserregern 31, 32 bzw. Schwingungssensoren 41, 42, 43 44 - vor schädlichen Umwelteinflüssen, zur Vermeidung von unerwünschten Schallemissionen durch die vibrierenden Rohre oder auch zum Auffangen von aus einer leckgeschlagenen Rohranordnung ausgetretenem Fluid umfaßt der Meßwandler, wie auch bei Meßwandler der in Rede stehenden Art bzw. damit gebildeten Meßsystemen durchaus üblich, nach einer weiteren Ausgestaltung der Erfindung ein die Rohre 111, 121, 112, 122 der Rohranordnung umhüllendes Wandlergehäuse 200. Nämliches Wandlergehäuse 200 weist zumindest eine, beispielsweise auch hermetisch geschlossene, Kavität 200* auf, innerhalb der - wie auch aus einer Zusammenschau der Fig.1, 2A, 2B, 3A und 3B ersichtlich - jedes der Rohre 111, 121, 112, 122 der Rohranordnung angeordnet ist. Das Wandlergehäuse kann beispielsweise eine Druckfestigkeit aufweisen, die größer als eine größte Druckfestigkeit der Rohre der Rohranordnung ist und/oder die mehr als 50 bar beträgt. Bei den in der Fig. 1, 2A, 2B, 3A, 3B, gezeigten Ausführungsbeispielen umfaßt das Wandlergehäuse 200 ein sich von einem ersten Ende bis zu einem zweiten Ende mit einer Tragelementlänge erstreckendes Tragelement 200-1, wobei das Tragelement 200-1 an dessen ersten Ende mit dem Strömungsteiler 21 und mit an dessen zweiten Ende mit dem Strömungsteiler 22 mechanisch, insb. stoffschlüssig, verbunden ist. Nämliches Tragelement 200-1 weist wenigstens einen von einer, beispielsweise metallischen, Wandung umhüllten, einen Teilbereich der vorbezeichneten Kavität 200* des Wandlergehäuses 200 bildenden Hohlraum 200*-1 auf und kann beispielsweise im wesentlichen zylindrisch, ggf. auch zumindest abschnittsweise hohlzylindrisch, bzw. röhrenförmig ausgebildet sein. Die Wandung des Tragelements 200-1 kann beispielsweise aus einem Stahl, beispielsweise nämlich einem Edelstahl oder einem Baustahl, und/oder aus dem gleichem Material wie die Wandung der Rohre 111, 121, 112, 122 bestehen. Das Tragelement kann u.a. dazu dienen, im Betrieb des Meßsystems via angeschlossener Prozeßleitung in den Meßwandler eingeleiteten mechanischen Kräften und/oder Momenten aufzunehmen, insb. derart, daß von nämlichen Kräften und/oder Momenten keine oder nur sehr geringe, nämlich für die angestrebte Meßgenauigkeit des Meßsystems vernachlässigbare Anteile auf die innerhalb des Wandlergehäuses angeordnete Rohranordnung übertragen werden. Neben dem Tragelement weist das Wandlergehäuse 200 bei den hier gezeigten Ausführungsbeispielen ferner ein Hüllelement 200-2 auf, das mit dem Tragelement 200-1 des Wandlergehäuses mechanisch, beispielsweise nämlich stoffschlüssig, verbunden ist. Nämliches Hüllelement 200-2 kann, wie auch aus einer Zusammenschau der Fig. 1, 2A, 3A und 3B ersichtlich, beispielsweise röhrenförmig ausgebildet sein, derart das es einen von einer Wandung umhüllten, einen Teilbereich der vorbezeichneten Kavität 200* bildenden, insb. teilweise kreiszylindrischen, Hohlraum 200*-2 aufweist. Alternativ dazu kann das Hüllelement 200-2 beispielsweise auch kappenförmig ausgebildet sein, derart, daß eine Wandung des Hüllelements zusammen mit einem Segment der Wandung des Trägerelements den vorbezeichneten Hohlraum 200*-2 bilden bzw. umhüllen. Wie auch aus den Fign. 3A, 3B ersichtlich sind das Wandlegehäuse und die Rohranordnugn ferner so ausgebildet, daß jedes der Rohre 111, 121, 112, 122 der Rohranordnung lediglich teilweise innerhalb des Hohlraums 200*-1 des Tragelements 200-1 bzw. jedes der Rohre 111, 121, 112, 122 lediglich teilweise innerhalb des Hohlraums 200*-2 des Hüllelements 200-2 angeordnet ist; dies - wie aus den Fign. 3A, 3B ohne weiteres ersichtlich - beispielsweise auch derart, daß jedes der Teilsegmente 111-4, 121-4, 112-4, 122-4 der Rohre ausschließlich innerhalb des Hohlraums 200*-2 des Hüllelements 200-2 angeordnet ist und/oder daß jedes der Teilsegmente 111-3, 121-3, 112-3, 122-3, 111-5, 121-5, 112-5, 122-5 der Rohre zumindest überwiegend innerhalb des Hohlraums 200*-2 des Hüllelements 200-2 angeordnet ist und/oder daß jedes der Teilsegmente 111-2, 121-2, 112-2, 122-2, 111-6, 121-6, 112-6, 122-6 der Rohre zumindest überwiegend außerhalb des Hohlraums 200*-2 des Hüllelements 200-2 angeordnet ist bzw. daß umgekehrt jedes der zweiten Teilsegmente 111-2, 121-2, 112-2, 122-2, 111-6, 121-6, 112-6, 122-6 der Rohre zumindest überwiegend innerhalb des Hohlraums 200*-1 des Tragelements 200-1 angeordnet ist und/oder daß jedes der Teilsegmente111-3, 121-3, 112-3, 122-3, 111-5, 121-5, 112-5, 122-5 der Rohre zumindest überwiegend außerhalb des Hohlraums 200*-1 des Tragelements 200-1 angeordnet ist. Zum seitlichen Hindurchführen der Rohre 111, 121, 112, 122 durch das Tragelement 200-1 weist dessen Wandung nach einer weiteren Ausgestaltung der Erfindung eine erste Öffnung 200-1a sowie wenigstens eine von nämlicher Öffnung 200-1a entlang einer gedachten Mantellinie der Wandung beabstandete zweite Öffnung 200-1b auf. Wie aus den Fign. 3A und 3B ohne weiteres ersichtlich, bildet jede der beiden Öffnungen 200-1a, 200-1b jeweils einen Teilbereich der vorbezeichneten Kavität 200* des Wandlergehäuses 200. Zudem erstreckt sich jedes der Rohre 111, 121, 112, 122 der Rohranordnung jeweils sowohl durch die Öffnung 200-1a als auch durch die Öffnung 200-1b.

Zwecks der Vermeidung von für die Messung schädlichen Kontakten der vibrierenden Rohre untereinander oder mit dem des Wandlergehäuse weist jedes der Rohre 111, 121, 112, 122 lediglich solche Abstände zu den jeweils anderen Rohren wie auch zum Wandlergehäuse 200, nicht zuletzt auch zu einem jeweiligen Rand jeder der beiden vorbezeichneten Öffnungen 200-1a, 200-1b in der Wandung des Tragelements 200-1, auf, die jeweils unter allen Betriebsbedingungen freie Schwingungen mit für die Messung ausreichender Schwingungsamplitude ermöglichen. Nach einer Ausgestaltung der Erfindung weist daher jedes der Rohre 111, 121, 112, 122 der Rohranordnung jeweils einen kleinsten Abstand zum Wandlerghäuse 200 und/oder einen kleinsten Abstand zu jedem anderen der Rohre 111, 121, 112 bzw. 122 auf, der größer als 5 mm ist. Dementsprechend weist jedes der Rohre auch jeweils einen kleinsten Abstand zu einem Rand der Öffnung 200-1a bzw. jeweils einen kleinsten Abstand zu einem Rand der Öffnung 200-1b auf, der größer als 5 mm ist. Um anderseits auch einen möglichst kompakten Meßwandler bereitstellen zu können ist nach einer weiteren Ausgestaltung vorgesehen einen oder mehrere, ggf. auch jeden der vorbezeichneten kleinsten Abstände kleiner als 10 mm zu halten. Nach einer weiteren Ausgestaltung der Erfindung ist ferner vorgesehen, daß sowohl innerhalb der Öffnung 200-1a als auch innerhalb der Öffnung 200-1b ein jeweiliger kleinster Abstand zwischen dem Rohr 111 und dem Rohr 112 jeweils kleiner ist als der vorbezeichnete kleinste Abstand zwischen dem Teilsegment 111-4 des Rohrs 111 und dem Teilsegment 112-4 des Rohrs 112 bzw. daß sowohl innerhalb der Öffnung 200-1a als auch innerhalb der Öffnung 200-1b ein jeweiliger kleinster Abstand zwischen dem Rohr 121 und dem Rohr 122 jeweils kleiner ist als der vorbezeichnete kleinste Abstand zwischen dem vierten Teilsegment 121-4 des Rohrs 121 und dem Teilsegment 122-4 des vierten Rohrs 122.

Neben dem Meßwandler MW umfaßt das Meßsystem ferner eine damit, nämlich sowohl mit der vorbezeichneten Erregeranordnung des Meßwandlers als auch mit der vorbezeichneten Sensoranordnung des Meßwandlers, beispielsweise nämlich mittels entsprechender elektrischer Verbindungsleitungen, elektrisch gekoppelte Meß- und Betriebselektronik ME. Die Meß- und Betriebselektronik ME des erfindungsgemäßen Meßsystems weist zwei, beispielsweise baugleiche, Treiberschaltungen (Exc1, Exc2) zum Bereitstellen elektrischer Leistung für die Erregeranordnung auf, von denen eine erste Treiberschaltung Exc1 eingerichtet ist, ein elektrisches erstes Treibersignal e31 zu generieren und damit elektrische Leistung, beispielsweise nämlich lediglich bzw. exklusiv, in den Schwingungserreger 31 einzuspeisen, derart, daß die ersten und zweiten Rohre 111, 112 zumindest anteilig Nutzschwingungen, nämlich gegengleiche erzwungene mechanische Schwingungen mit wenigstens einer ersten Nutzfrequenz f_{N1}, nämlich einer durch das Treibersignal e31 vorgegebenen Schwingungsfrequenz ausführen, die geeignet sind, im durch nämliche Rohre 111, 112 jeweils hindurchströmenden Meßstoff vom Massenstrom abhängige Corioliskräfte zu bewirken, und von denen eine zweite Treiberschaltung Exc2 eingerichtet ist, ein elektrisches zweites Treibersignal e32 zu generieren und damit elektrische Leistung, beispielsweise lediglich bzw. exklusiv, in den Schwingungserreger 32 einzuspeisen, derart, daß die dritten und vierten Rohre 121, 122 zumindest anteilig Nutzschwingungen, nämlich gegengleiche erzwungene mechanische Schwingungen mit wenigstens einer zweiten Nutzfrequenz f_{N2}, nämlich einer durch das Treibersignal e32 vorgegebenen Schwingungsfrequenz ausführen, die geeignet sind, im durch die dritten und vierten Rohre jeweils hindurchströmenden Meßstoff vom Massenstrom abhängige Corioliskräfte zu bewirken. Die vorbezeichnete erste Nutzfrequenz f_{N1} kann beispielsweise einer von der Dichte des in der Rohranordnung geführten Fluid FL abhängigen ersten Resonanzfrequenz der Rohranordnung - beispielsweise nämlich einer niedrigsten gemeinsamen Resonanzfrequenz eines mittels der Rohre 111, 121 gebildeten ersten Rohrpaares - entsprechen und die vorbezeichnete zweite Nutzfrequenz f_{N2} kann beispielsweise einer von der Dichte des in der Rohranordnung geführten Fluid FL abhängigen, ggf. auch von der ersten Resonanzfrequenz abweichenden, zweiten Resonanzfrequenz der Rohranordnung - beispielsweise nämlich einer niedrigsten gemeinsamen Resonanzfrequenz eines mittels der Rohre 112, 122 gebildeten zweiten Rohrpaares - entsprechen. Nach einer weiteren Ausgestaltung der Erfindung ist ferner vorgesehen, daß der Schwingungserreger 31 elektrisch lediglich bzw. exklusiv mit der Treiberschaltung Exc1 verbunden ist und daß der Schwingungserreger 32 elektrisch lediglich bzw. exklusiv mit der Treiberschaltung Exc2 verbunden ist, mithin ist vorgesehen, daß im Betrieb die Treiberschaltung Exc1 keine elektrische Leistung in Schwingungserreger 32 einspeist und die Treiberschaltung Exc2 keine elektrische Leistung in Schwingungserreger 31 einspeist.

Desweiteren ist die Meß- und Betriebselektronik auch dafür vorgesehen bzw. eingerichtet, die vorbezeichneten Schwingungsmeßsignale s41, s42, s43, s44 zu empfangen und auszuwerten, beispielsweise nämlich anhand von deren vorbezeichneter ersten Phasendifferenz Δφ12 und/oder anhand von deren vorbezeichneter zweiten Phasendifferenz Δφ34 die Massenstrom des Meßstoffs FL repräsentierende (Gesamt-)Massenstrom-Meßwerte (Xₘ) zu generieren und/oder anhand wenigstens einer Signalfrequenz wenigstens eines der Schwingungsmeßsignale s41, s42, s43, s44, beispielsweise nämlich anhand einer der vorbezeichneten ersten Nutzfrequenz entsprechenden Signalfrequenz wenigstens eines der Schwingungsmeßsignale s41, s42 und/oder anhand einer der vorbezeichneten zweiten Nutzfrequenz entsprechenden Signalfrequenz wenigstens eines der Schwingungsmeßsignale s43, s44, die Dichte des Fluids FL repräsentierende (Gesamt-)Dichte-Meßwerte (X_{ρ}) zu generieren. Alternativ oder in Ergänzung kann die Meß- und Betriebselektronik auch dafür vorgesehen bzw. eingerichtet sein, anhand wenigstens eines der Schwingungsmeßsignale s41, s42, s43, s44, und/oder wenigstens eines der vorbezeichneten Treibersignale e31, e32 die Viskosität des Meßstoffs FL repräsentierende (Gesamt-)Viskositäts-Meßwerte (X_{η}) zu generieren.

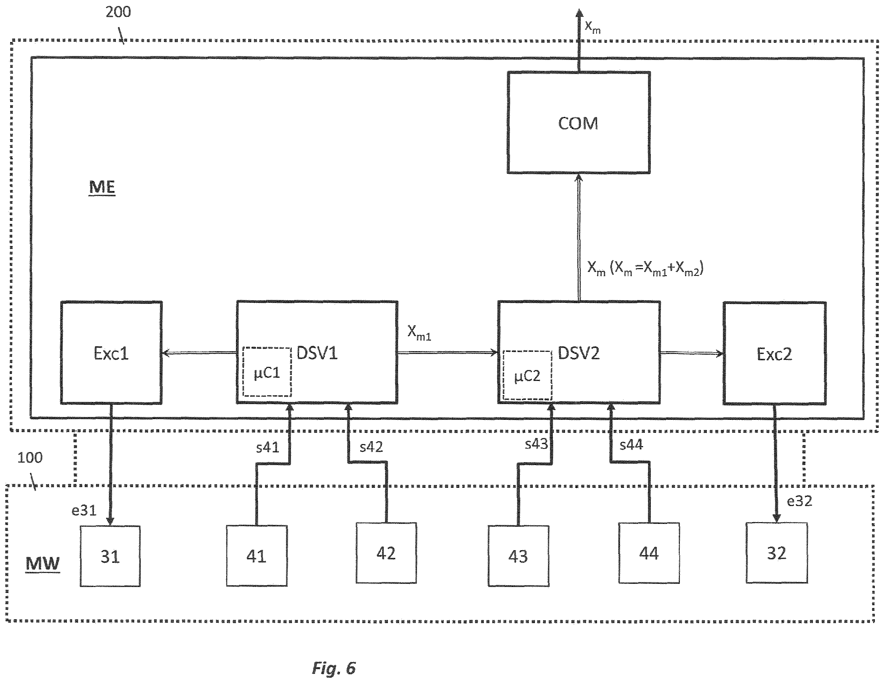

Zum Verarbeiten von Schwingungsmeßsignalen der Sensoranordnung und zum Ansteuern der Treiberschaltungen weist die Meß- und Betriebselektronik ME des erfindungsgemäßen Meßsystems - wie auch in Fig. 6 schematisch dargestellt - eine erste Meßumformerschaltung DSV1 sowie wenigstens eine zweite Meßumformerschaltung DSV2 auf, wobei die Meßumformerschaltung DSV1 dafür eingerichtet ist, sowohl das Schwingungsmeßsignal s41 vom Schwingungssensor 41 als auch das Schwingungsmeßsignal s42 vom Schwingungssensor 42 zu empfangen und zu verarbeiten, nämlich einen Massenstrom, m1, des durch die ersten und zweiten Rohre 111, 112 strömenden Meßstoffs (FL12) repräsentierende, insb. digitale, erste Teil-Massenstrom-Meßwerte Xₘ₁ zu ermitteln und an die Meßumformerschaltung DSV2 auszugeben, und wobei die Meßumformerschaltung DSV2 dafür eingerichtet ist, sowohl das Schwingungsmeßsignal s43 vom Schwingungssensor 43 als auch das Schwingungsmeßsignal s44 vom Schwingungssensor 44 wie auch von der Meßumformerschaltung DSV1 ausgegebene Teil-Massenstrom-Meßwerte Xₘ₁ zu empfangen und zu verarbeiten, nämlich einen Gesamt-Massenstrom m des durch die ersten, zweiten, dritten und vierten Rohre 111, 112, 121, 122 strömenden Meßstoffs FL repräsentierende, insb. digitale, Gesamt-Durchfluß-Meßwerte Xₘ zu ermitteln. Dementsprechend kann die Meßumformerschaltung DSV1 im besonderen auch dafür eingerichtet sein, die vorbezeichnete Phasendifferenz Δφ12 zwischen den Schwingungsmeßsignal s41, s42 zu ermitteln und basierend darauf die Teil-Massenstrom-Meßwerte Xₘ₁ zu berechnen und kann die Meßumformerschaltung DSV2 im besonderen auch dafür eingerichtet sein, die vorbezeichnete Phasendifferenz Δφ34 zwischen den Schwingungsmeßsignal s43, s44 zu ermitteln und in die Berechnung der Gesamt-Massenstrom-Meßwerte Xₘ mit einzubeziehen.

Nach einer weiteren Ausgestaltung der Erfindung ist ferner vorgesehen, daß sowohl der Schwingungssensor 41 als auch der Schwingungssensor 42 elektrisch jeweils lediglich bzw. exklusiv mit der Meßumformerschaltung DSV1 verbunden sind und daß sowohl der Schwingungssensor 43 als auch der Schwingungssensor 44 elektrisch jeweils lediglich bzw. exklusiv mit der Meßumformerschaltung DSV2 verbunden sind. Nach einer weiteren Ausgestaltung der Erfindung ist die Meßumformerschaltung DSV1 dafür eingerichtet, sowohl die Schwingungsmeßsignale s41, s42 zu verarbeiten als auch die Treiberschaltung Exc1 anzusteuern, beispielsweise nämlich anhand der ersten und/oder zweiten Schwingungsmeßsignale Sollwerte für die Generierung des Treibersignals e31 zu berechnen und an die Treiberschaltung Exc1 zu übermitteln, und/oder ist die Meßumformerschaltung DSV2 dafür eingerichtet, sowohl die Schwingungsmeßsignale s43, s44 zu verarbeiten als auch die Treiberschaltung Exc2 anzusteuern, beispielsweise nämlich der dritten und/oder vierten Schwingungsmeßsignale Sollwerte für die Generierung des Treibersignals e32 zu berechnen und an die Treiberschaltung Exc2 zu übermitteln. Zudem kann die Treiberschaltung Exc1 auch eingerichtet sein, eine Signalamplitude des Treibersignals e31 repräsentierende Amplitudenwerte zu ermitteln und an die Meßumformerschaltung DSV1 auszugeben und/oder kann die Treiberschaltung Exc2 auch eingerichtet sein, eine Signalamplitude des Treibersignals e32 repräsentierende Amplitudenwerte zu ermitteln und an die Meßumformerschaltung DSV2 auszugeben. Darüberhinaus kann die Meßumformerschaltung DSV1 ferner auch eingerichtet sein, Sollwerte für die Generierung des Treibersignals e31 und/oder von der Treiberschaltung Exc1 empfangene Amplitudenwerte für die Signalamplitude des Treibersignals e31 auch an die Meßumformerschaltung DSV2 zu übermitteln und kann die Meßumformerschaltung DSV2 zudem eingerichtet sein, nämliche Sollwerte bzw. nämliche Amplitudenwerte zu empfangen und zu verarbeiten, beispielsweise nämlich zusammen mit Sollwerten für die Generierung des Treibersignals e32 und/oder mit Amplitudenwerten für die Signalamplitude des Treibersignals e32 in die Berechnung der vorbezeichneten Viskositäts-Meßwerte X_{η} einzubeziehen. Dementsprechend können beispielsweise die Treiberschaltung Exc1 mit der Meßumformerschaltung DSV1 und/oder die Treiberschaltung Exc2 mit der Meßumformerschaltung DSV2 und/oder die Meßumformerschaltung DSV1 mit der Meßumformerschaltung DSV2 elektrisch verbunden sein, beispielsweise nämlich über einen oder mehrere Datenbusse der Meß- und Betriebselektronik. Nach einer weiteren Ausgestaltung der Erfindung ist ferner vorgesehen, daß die Treiberschaltung Exc1 aber nicht mit der Meßumformerschaltung DSV2 elektrisch verbunden ist und/oder daß die Treiberschaltung Exc2 aber nicht mit der Meßumformerschaltung DSV1 elektrisch verbunden ist. Jeder der beiden Meßumformerschaltungen DSV1, DSV2 kann zudem beispielsweise jeweils mittels eines eigenen Mikroprozessors gebildet sein. Dementsprechend ist nach einer weiteren Ausgestaltung der Erfindung die Meßumformerschaltung DSV1 mittels eines ersten Mikroprozessors µC1 gebildet und ist die Meßumformerschaltung mittels eines - beispielsweise auch zum Mikroprozessors µC1 baugleichen - zweiten Mikroprozessors µC2 gebildet. Nach einer weiteren Ausgestaltung der Erfindung ist die Meßumformerschaltung DSV2 ferner auch dafür eingerichtet, unter Verwendung der dritten und vierten Schwingungsmeßsignale s43, s44 einen Massenstrom m2 des durch die dritten und vierten Rohre 121, 122 strömenden Meßstoffs FL34 repräsentierende, insb. digitale, zweite Teil-Massenstrom-Meßwerte Xₘ₂ zu ermitteln, beispielsweise nämlich die Gesamt-Durchfluß-Meßwerte Xₘ unter Verwendung auch von nämlichen Teil-Massenstrom-Meßwerten Xₘ₂ zu ermitteln, etwa durch ein wiederholtes Summieren eines momentanen zweiten Teil-Massenstrom-Meßwerts mit einem zeitlich dazu passenden ersten Teil-Massenstrom-Meßwert.

Wie bereits erwähnt kann das erfindungsgemäße Meßsystem ferner auch ausgestaltet sein, eine Dichte des Meßstoffs zu messen. Dementsprechend ist die Meßumformerschaltung DSV1 nach einer weiteren Ausgestaltung der Erfindung ferner dafür eingerichtet, basierend auf wenigstens einem der ersten und zweiten Schwingungsmeßsignale s41, s42 eine Dichte ρ1 des durch die ersten und zweiten Rohre 111, 112 strömenden Meßstoffs FL12 repräsentierende, insb. digitale, erste Teil-Dichte-Meßwerte X_{ρ1} zu ermitteln und an die Meßumformerschaltung DSV2 auszugeben. Die Meßumformerschaltung DSV2 wiederum kann zudem dafür eingerichtet sein, von der Meßumformerschaltung DSV1 ausgegebene Teil-Dichte-Meßwerte X_{ρ1} zu empfangen und basierend auf nämlichen Teil-Dichte-Meßwerte X_{ρ1} sowie wenigstens einem der dritten und vierten Schwingungsmeßsignale s43, s44 eine Dichte ρ des durch die Rohre 111, 112, 121, 122 bzw. die damit gebildete Rohranordnung strömenden Meßstoffs FL, beispielsweise eine mittlere Dichte, repräsentierende, insb. digitale, Gesamt-Dichte-Meßwerte X_{ρ} zu ermitteln. Alternativ oder in Ergänzung kann die Meßumformerschaltung DSV2 ferner auch dafür eingerichtet sein, basierend auf wenigstens einem der dritten und vierten Schwingungsmeßsignale s43, s44 eine Dichte ρ2 des durch die dritten und vierten Rohre 121, 122 strömenden Meßstoffs FL34 repräsentierende, insb. digitale, zweite Teil-Dichte-Meßwerte X_{ρ2} zu ermitteln, beispielsweise nämlich auch die vorbezeichneten von der Meßumformerschaltung DSV1 ausgegebenen Teil-Dichte-Meßwerte X_{ρ1} zu empfangen und basierend auf (zeitlich zueinander passenden) ersten und zweiten Teil-Dichte-Meßwerten X_{ρ1}, X_{ρ2} die vorbezeichneten Gesamt-Dichte-Meßwerte X_{ρ} zu ermitteln.

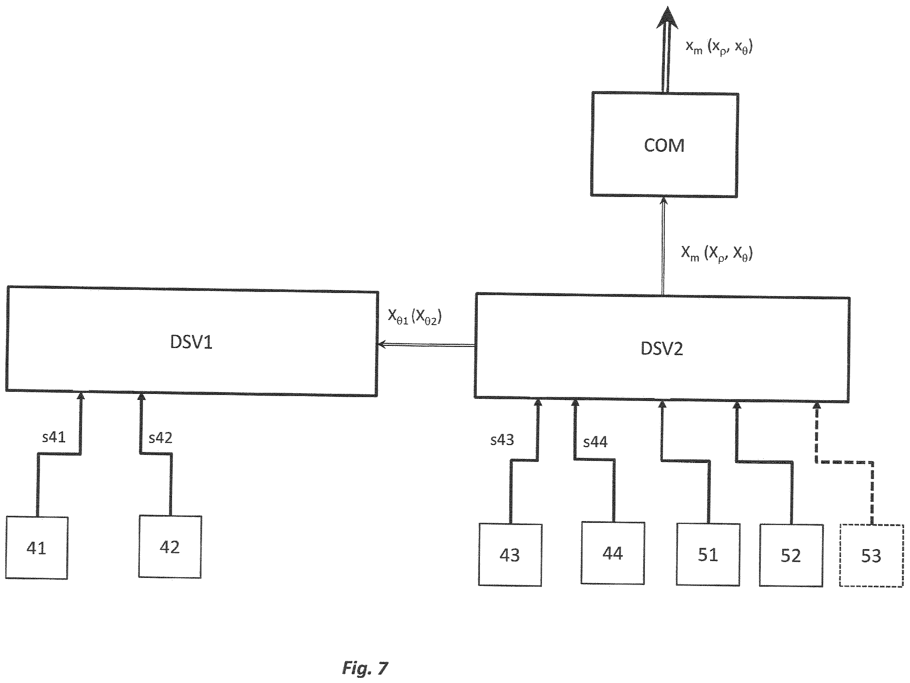

Zur weiteren Verbesserung der Genauigkeit mit der die Meßwerte, nicht zuletzt auch die vorbezeichneten Teil-Dichte-Meßwerten X_{ρ1}, X_{ρ2} bzw. die vorbezeichneten Gesamt-Dichte-Meßwerte X_{ρ}, weist die die Sensoranordnung - wie auch in Fig. 3B schematisch dargestellt - nach einer weiteren Ausgestaltung der Erfindung wenigstens zwei, beispielsweise auch baugleiche und/oder voneinander beabstandete, Temperatursensoren (51, 52, 53) auf, von denen ein erster Temperatursensor 51 mechanisch mit - insb. genau - einem der Rohre 111, 112, 121, 122 der Rohranordnung sowie -- wie auch in Fig. 7 angedeutet - elektrisch, insb. lediglich bzw. exklusiv, mit der Meßumformerschaltung DSV2 verbunden ist, und von denen ein zweiter Temperatursensor 52 mechanisch ebenfalls mit - insb. genau - einem der Rohre 111, 112, 121, 122 sowie -- wie auch in Fig. 7 angedeutet - elektrisch, insb. lediglich bzw. exklusiv, mit der Meßumformerschaltung DSV2 verbunden ist. Jeder der vorbezeichneten Temperatursensoren 51, 52 ist ferner jeweils eingerichtet, eine Temperatur des damit mechanisch verbundenen Rohrs zu erfassen und ein nämliche Temperatur repräsentierendes, insb. elektrisches, erstes bzw. zweites Temperaturmeßsignal θ51, θ52 bereitzustellen. Der Temperatursensor 51, 52 kann beispielsweise am Rohr 111 und der Temperatursensor 52 kann an einem anderen der Rohre angebracht sein, beispielsweise auch derart, daß die Temperatursensoren 51, 52 jeweils im gleichen Abstand zum Strömungsteiler 21 und/oder in dessen Nähe positioniert sind; die Temperatursensoren 51, 52 können - wie auch in Fig. 3B dargestellt - aber beispielsweise auch jeweils am gleichen Rohr angebracht und/oder auch so positioniert sein, daß - wie in Fig. 3B angedeutet - der Temperatursensor 51 gleichweit vom Strömungsteiler 21 entfernt ist wie der Temperatursensor 52 vom Strömungsteiler 22. Die Meßumformerschaltung DSV2 wiederum ist ferner auch dafür eingerichtet, das erste Temperaturmeßsignal θ51 vom Temperatursensor 51 zu empfangen und zu verarbeiten, nämlich die mit dem Temperatursensor 51 erfaßte eine davon abhängige Temperatur repräsentierende, insb. digitale, erste Temperatur-Meßwerte X_{θ1} zu ermitteln. Darüberhinaus ist die Meßumformerschaltung DSV2 auch eingerichtet, das zweite Temperaturmeßsignal θ52 vom Temperatursensor 52 zu empfangen und zu verarbeiten, nämlich die mit dem Temperatursensor 52 erfaßte oder eine davon abhängige Temperatur repräsentierende, insb. digitale, zweite Temperatur-Meßwerte X_{θ2} zu ermitteln. Nach einer weiteren Ausgestaltung der Erfindung ist die Meßumformerschaltung DSV2 zudem dafür eingerichtet, die Gesamt-Massenstrom-Meßwerte und/oder die vorbezeichneten Gesamt-Dichte-Meßwerte X_{ρ} auch unter Verwendung der vorbezeichneten Temperatur-Meßwerte X_{θ1}, X_{θ2} zu ermitteln. Zudem kann die Meßumformerschaltung DSV2 auch dafür eingerichtet sein, zumindest die Temperatur-Meßwerte X_{θ1} oder auch jeden der Temperatur-Meßwerte X_{θ1}, X_{θ2} an die Meßumformerschaltung DSV1 auszugeben und kann die Meßumformerschaltung DSV1 dann entsprechend dafür eingerichtet sein, von der Meßumformerschaltung DSV2 ausgegebene Temperatur-Meßwerte zu empfangen und auszuwerten, beispielsweise nämlich die Teil-Massenstrom-Meßwerte Xₘ₁ und/oder die vorbezeichneten Teil-Dichte-Meßwerte X_{ρ1} auch unter Verwendung zumindest der Temperatur-Meßwerte X_{θ1}, ggf. auch auch Verwendung sowohl der Temperatur-Meßwerte X_{θ1} als auch der der Temperatur-Meßwerte X_{θ2} zu ermitteln. Darüberhinaus kann die Meßumformerschaltung DSV2 ferner eingerichtet sein, basierend auf den Temperaturmeßsignalen θ51, θ52 bzw. den Temperatur-Meßwerten X_{θ1}, X_{θ2} einen eine Temperatur des Meßstoffs FL repräsentierende Meßstoff-Temperatur-Meßwerte X_{θFL} zu ermitteln.

Nach einer anderen Ausgestaltung der Erfindung weist die Sensoranordnung wenigstens einen dritten Temperatursensor 53 auf, der - wie auch in Fig. 3B angedeutet- mechanisch mit Wandlergehäuse 200 sowie elektrisch, beispielsweise lediglich bzw. exklusiv, mit der Meßumformerschaltung DSV2 verbunden und zudem dafür eingerichtet ist, eine Temperatur des Wandlergehäuses zu erfassen und ein nämliche Temperatur repräsentierendes, insb. elektrisches, drittes Temperaturmeßsignal θ53 bereitzustellen. Die Meßumformerschaltung DSV2 kann - wie auch in Fig. 7 angedeutet - ferner dafür eingerichtet sein, das Temperaturmeßsignal θ53 vom Temperatursensor 53 zu empfangen und zu verarbeiten, nämlich die mit dem Temperatursensor 53 erfaßte Temperatur oder eine davon abhängige Temperatur repräsentierende, insb. digitale, dritte Temperatur-Meßwerte X_{θ3} zu ermitteln. Nach einer weiteren Ausgestaltung der Erfindung ist die Meßumformerschaltung DSV2 zudem dafür eingerichtet, die Gesamt-Massenstrom-Meßwerte und/oder die vorbezeichneten Gesamt-Dichte-Meßwerte X_{ρ} und/oder die vorbezeichneten Meßstoff-Temperatur-Meßwerte X_{θFL} auch unter Verwendung nämlicher Temperatur-Meßwerte X_{θ3} zu ermitteln. Zudem kann die Meßumformerschaltung DSV2 auch dafür eingerichtet sein, die Temperatur-Meßwerte X_{θ3} auch an die Meßumformerschaltung DSV1 auszugeben und kann die Meßumformerschaltung DSV1 dann entsprechend dafür eingerichtet sein, von der Meßumformerschaltung DSV2 ausgegebene Temperatur-Meßwerte X_{θ3} zu empfangen und auszuwerten, beispielsweise nämlich die Teil-Massenstrom-Meßwerte Xₘ₁ und/oder die vorbezeichneten Teil-Dichte-Meßwerte X_{ρ1} auch unter Verwendung zumindest der Temperatur-Meßwerte X_{θ3} zu ermitteln.

Wie aus der Fig. 6 ersichtlich, ist in der Meß- und Betriebselektronik ME nach einer weiteren Ausgestaltung der Erfindung ferner auch eine der Ausgabe (xₘ) von, beispielsweise digitalen und/oder mittels der Meßumformerschaltung DSV2 ermittelten, Meßwerten, beispielsweise nämlich den Gesamt -Massenstrom-Meßwerten Xₘ, dienliche, insb. nämlich elektrisch mit der Meßumformerschaltung DSV2 verbundene, Schnittstellenschaltung COM vorgesehen. Dementsprechend ist die Meßumformerschaltung DSV2 nach einer weiteren Ausgestaltung der Erfindung ferner eingerichtet, damit ermittelte Gesamt-Durchfluß-Meßwerte Xₘ an die Schnittstellenschaltung COM auszugeben und ist die Schnittstellenschaltung zudem eingerichtet, von der Meßumformerschaltung DSV2 ausgegebene Gesamt-Massenstrom-Meßwerte Xₘ zu empfangen und in ein nämliche Gesamt-Massenstrom-Meßwerte Xₘ bereitstellendes, beispielsweise zu einem Industriestandard, beispielsweise nämlich der DIN IEC 60381-1:1985-11, der IEC 61784-1 CPF1 (Foundation Fieldbus), der IEC 61784-1 CPF3 (Profibus), IEC 61158 oder der IEC 61784-1 CPF9 (HART), konformes, Massenstrom-Ausgabesignal xₘ zu wandeln. Die Schnittstellenschaltung COM kann dafür beispielsweise auch mit der Meßumformerschaltung DSV2, gleichwohl nicht mit der Meßumformerschaltung DSV1 elektrisch verbunden sein. Darüberhinaus kann die die Meßumformerschaltung DSV2 auch eingerichtet sein, die vorbezeichneten Gesamt-Dichte-Meßwerte X_{ρ} und/oder die vorbezeichneten Meßstoff-Temperatur-Meßwerte X_{θFL} an die Schnittstellenschaltung COM auszugegeben und kann die Schnittstellenschaltung COM kann dementsprechend auch ferner dafür eingerichtet sein, in ein nämliche Gesamt-Dichte-Meßwerte X_{ρ} bzw. die vorbezeichneten Meßstoff-Temperatur-Meßwerte X_{θFL} bereitstellendes, beispielsweise zu einem der vorbezeichneten Industriestandards konformes, Dichte-Ausgabesignal x_{ρ} bzw. Temperatur-Ausgabesignal x_{θ} zu wandeln zu wandeln.

Die Meß- und Betriebselektronik ME kann, wie auch in Fig. 1, 2A und 2B jeweils angedeutet, ferner in einem, insb. explosions- bzw. druckfesten und/oder die Meß- und Betriebselektronik ME zumindest gegen Spritzwasser schützendes, Elektronik-Schutzgehäuse 100 untergebracht sein; dies im besonderen in der Weise, daß sowohl die Treiberschaltungen Exc1, Exc2 als auch die Meßumformerschaltungen DSV1, DSV2, insb. nämlich auch die vorbezeichnete Schnittstellenschaltung COM, im Elektronik-Schutzgehäuse 100 untergebracht sind.

## Patentansprüche

1. Vibronisches Meßsystem, insb. Coriolis-Massendurchfluß-Meßgerät oder Coriolis-Massendurchfluß-/Dichte-Meßgerät, zum Messen und/oder Überwachen wenigstens eines, insb. zeitlich veränderlichen, Strömungsparameters, insb. eines Massenstrome, eines Volumenstroms und/oder einer Strömungsgeschwindigkeit, und/oder zum Messen und/oder Überwachen wenigstens eines, insb. zeitlich veränderlichen, Stoffparameters, insb. einer Dichte und/oder einer Viskosität, eines strömenden Meßstoffs, insb. eines Gases, einer Flüssigkeit oder einer Dispersion, welches Meßsystem umfaßt:
- einen Meßwandler (MW)
-- mit einer Rohranordnung zum Führen des strömenden Fluids,
-- mit einer Erregeranordnung zum Wandeln elektrischer Leistung in dem Anregen und Aufrechterhalten erzwungener mechanischer Schwingungen der Rohranordnung dienliche mechanische Leistung
-- und mit einer Sensoranordnung zum Erfassen von mechanischen Schwingungen der Rohranordnung und zum Bereitstellen von jeweils Schwingungsbewegungen der Rohranordnung repräsentierenden Schwingungsmeßsignalen;
- sowie eine mit dem Meßwandler (MW), nämlich sowohl mit dessen Erregeranordnung als auch mit dessen Sensoranordnung, insb. mittels elektrischer Verbindungsleitungen, elektrisch gekoppelte Meß- und Betriebselektronik (ME)
-- mit einer ersten Treiberschaltung (Exc1) zum Bereitstellen elektrischer Leistung für die Erregeranordnung,
-- mit einer ersten Meßumformerschaltung (DSV1) zum Verarbeiten von Schwingungsmeßsignalen der Sensoranordnung und zum Ansteuern der ersten Treiberschaltung,
-- mit einer zweiten Treiberschaltung (Exc2) zum Bereitstellen elektrischer Leistung für die Erregeranordnung,
-- und mit einer zweiten Meßumformerschaltung (DSV2) zum Verarbeiten von Schwingungsmeßsignalen der Sensoranordnung und zum Ansteuern der zweiten Treiberschaltung;
- wobei die Rohranordnung
-- einen, insb. als Leitungsverzweigung dienlichen und/oder einlaßseitigen, ersten Strömungsteiler (21) mit, insb. genau, vier Strömungsöffnungen,
-- einen, insb. dem ersten Strömungsteiler (21) baugleichen und/oder als Leitungsvereinigung dienlichen und/oder auslaßseitigen, zweiten Strömungsteiler (22) mit, insb. genau, vier Strömungsöffnungen,
-- sowie vier lediglich paarweise baugleiche Rohre, nämlich
--- ein, insb. zumindest abschnittsweise gekrümmtes, erstes Rohr (111),
--- ein dem ersten Rohr baugleiches zweites Rohr (121),
--- ein, insb. zumindest abschnittsweise gekrümmtes, drittes Rohr (112)
--- sowie ein lediglich dem dritten Rohr baugleiches viertes Rohr (122) aufweist,
-- wobei jedes der ersten, zweiten, dritten und vierten Rohre der Rohranordnung sich jeweils von einem jeweiligen ersten Ende des jeweiligen Rohrs bis zu einem jeweiligen zweiten Ende nämlichen Rohrs mit einer jeweiligen Rohrlänge erstreckt und jeweils ein von einer, insb. metallischen, Rohrwandung umschlossenes, sich jeweils vom jeweiligen ersten Ende des jeweiligen Rohrs bis zum jeweiligen zweiten Ende nämlichen Rohrs erstreckenden Lumen aufweist,
-- wobei jedes der ersten, zweiten, dritten und vierten Rohre der Rohranordnung jeweils an jeden der ersten und zweiten Strömungsteiler angeschlossen ist, derart, daß
--- das erste Rohr mit dessen ersten Ende in eine erste Strömungsöffnung des ersten Strömungsteilers (21) und mit dessen zweiten Ende in eine erste Strömungsöffnung des zweiten Strömungsteilers (22),
--- das zweite Rohr mit dessen ersten Ende in eine zweite Strömungsöffnung des ersten Strömungsteilers (21) und mit dessen zweiten Ende in eine zweite Strömungsöffnung des zweiten Strömungsteilers (22),
--- das dritte Rohr mit dessen ersten Ende in eine dritte Strömungsöffnung des ersten Strömungsteilers (21) und mit dessen zweiten Ende in eine dritte Strömungsöffnung des zweiten Strömungsteilers (22)
--- und das vierte Rohr mit dessen ersten Ende in eine vierte Strömungsöffnung des ersten Strömungsteilers (21) und mit dessen zweiten Ende in eine vierte Strömungsöffnung des zweiten Strömungsteilers (22) münden,
--- und wobei jedes der ersten, zweiten, dritten und vierten Rohre der Rohranordnung jeweils eingerichtet ist, von Meßstoff durchströmt und währenddessen vibrieren gelassen zu werden;
- wobei die Erregeranordnung zwei, insb. elektrodynamische und/oder baugleiche, Schwingungserreger (31, 32) aufweist, von denen
-- ein erster Schwingungserreger (31) mechanisch mit sowohl dem ersten Rohr als auch dem zweiten Rohr sowie elektrisch, insb. lediglich, mit der ersten Treiberschaltung verbunden ist
-- und ein zweiter Schwingungserreger (32) mechanisch mit sowohl mit dem dritten Rohr als auch dem vierten Rohr sowie elektrisch, insb. lediglich, mit der zweiten Treiberschaltung verbunden ist,
-- wobei jeder der ersten und zweiten Schwingungserreger (31, 32) jeweils eingerichtet ist, elektrische in mechanische Leistung zu wandeln;
- wobei die erste Treiberschaltung eingerichtet ist, ein elektrisches erstes Treibersignal (e31) zu generieren und damit elektrische Leistung, insb. lediglich, in den ersten Schwingungserreger (31) einzuspeisen, derart, daß die ersten und zweiten Rohre zumindest anteilig Nutzschwingungen, nämlich gegengleiche erzwungene mechanische Schwingungen mit wenigstens einer ersten Nutzfrequenz, nämlich einer durch das erste Treibersignal vorgegebenen, insb. einer ersten Resonanzfrequenz der Rohranordnung entsprechenden, Schwingungsfrequenz ausführen, die geeignet sind, im durch die ersten und zweiten Rohre jeweils hindurchströmenden Meßstoff vom Massenstrom abhängige Corioliskräfte zu bewirken,
- und wobei die zweite Treiberschaltung eingerichtet ist, ein elektrisches zweites Treibersignal (e32) zu generieren und damit elektrische Leistung, insb. lediglich, in den zweiten Schwingungserreger (32) einzuspeisen, derart, daß die dritten und vierten Rohre zumindest anteilig Nutzschwingungen, nämlich gegengleiche erzwungene mechanische Schwingungen mit wenigstens einer zweiten Nutzfrequenz, nämlich einer durch das zweite Treibersignal vorgegebenen, insb. einer zweiten Resonanzfrequenz der Rohranordnung entsprechenden, Schwingungsfrequenz ausführen, die geeignet sind, im durch die dritten und vierten Rohre jeweils hindurchströmenden Meßstoff vom Massenstrom abhängige Corioliskräfte zu bewirken;
- wobei die Sensoranordnung vier, insb. elektrodynamische und/oder baugleiche und/oder voneinander beabstandete, Schwingungssensoren aufweist, von denen
-- ein erster Schwingungssensor und ein zweiter Schwingungssensor mechanisch jeweils mit sowohl dem ersten Rohr als auch dem zweiten Rohr sowie elektrisch jeweils, insb. lediglich, mit der ersten Meßumformerschaltung verbunden sind
-- und ein dritter Schwingungssensor und ein vierter Schwingungssensor mechanisch jeweils mit sowohl dem dritten Rohr als auch dem vierten Rohr sowie elektrisch jeweils, insb. lediglich, mit der zweiten Meßumformerschaltung verbunden sind,
-- wobei jeder der ersten, zweiten, dritten und vierten Schwingungssensoren jeweils eingerichtet ist, Schwingungsbewegungen der damit mechanische verbundenen ersten, zweiten, dritten bzw. vierten Rohre zu erfassen und ein nämliche Schwingungsbewegungen repräsentierendes, insb. elektrisches, erstes, zweites, drittes bzw. viertes Schwingungsmeßsignal bereitzustellen;
- wobei die erste Meßumformerschaltung dafür eingerichtet ist, sowohl das erste Schwingungsmeßsignal vom ersten Schwingungssensor als auch das zweite Schwingungsmeßsignal vom zweiten Schwingungssensor zu empfangen und zu verarbeiten, nämlich einen Massenstrom, m1, des durch die ersten und zweiten Rohre strömenden Meßstoffs repräsentierende, insb. digitale, erste Teil-Massenstrom-Meßwerte (Xₘ₁) zu ermitteln und an die zweite Meßumformerschaltung auszugeben,
- und wobei die zweite Meßumformerschaltung dafür eingerichtet ist, sowohl das dritte Schwingungsmeßsignal vom dritten Schwingungssensor als auch das vierte Schwingungsmeßsignal vom vierten Schwingungssensor wie auch von der ersten Meßumformerschaltung ausgegebene erste Teil-Massenstrom-Meßwerte zu empfangen und zu verarbeiten, nämlich einen Gesamt-Massenstrom, m, des durch die ersten, zweiten, dritten und vierten Rohre strömenden Meßstoffs repräsentierende, insb. digitale, Gesamt-Durchfluß-Meßwerte (Xₘ) zu ermitteln.

2. Meßsystem nach dem vorherigen Anspruch,
- wobei die erste Treiberschaltung, insb. über einen Datenbus, elektrisch mit der ersten Meßumformerschaltung, insb. nicht mit der zweiten Meßumformerschaltung elektrisch verbunden ist;
und/oder
- wobei die zweite Treiberschaltung, insb. über einen Datenbus, elektrisch mit der zweiten Meßumformerschaltung, insb. nicht mit der ersten Meßumformerschaltung elektrisch verbunden ist;
und/oder
- wobei die erste Meßumformerschaltung und die zweite Meßumformerschaltung, insb. über einen Datenbus, miteinander elektrisch verbunden sind; und/oder
- wobei die erste Meßumformerschaltung mittels eines ersten Mikroprozessors und die zweite Meßumformerschaltung mittels eines zweiten Mikroprozessors gebildet ist.

3. Meßsystem nach einem der vorherigen Ansprüche, wobei die zweite Meßumformerschaltung dafür eingerichtet ist, unter Verwendung der dritten und vierten Schwingungsmeßsignale einen Massenstrom, m2, des durch die dritten und vierten Rohre strömenden Meßstoffs repräsentierende, insb. digitale, zweite Teil-Massenstrom-Meßwerte (Xₘ₂) zu ermitteln, insb. nämlich die Gesamt-Durchfluß-Meßwerte unter Verwendung auch von zweiten Teil-Massenstrom-Meßwerten zu ermitteln.

4. Meßsystem nach einem der vorherigen Ansprüche, wobei die Sensoranordnung wenigstens zwei, insb. baugleiche und/oder voneinander beabstandete, Temperatursensoren aufweist, von denen
- ein erster Temperatursensor mechanisch mit einem der ersten, zweiten, dritten und vierten Rohre, insb. nämlich mit dem ersten Rohr oder mit dem zweiten Rohr, sowie elektrisch jeweils, insb. lediglich, mit der zweiten Meßumformerschaltung verbunden ist,
- und ein zweiter Temperatursensor mechanisch mit einem der ersten, zweiten, dritten und vierten Rohre, insb. nämlich demselben Rohr wie der erste Temperatursensor, sowie elektrisch jeweils, insb. lediglich, mit der zweiten Meßumformerschaltung verbunden ist,
- wobei jeder der ersten und zweiten Temperatursensoren jeweils eingerichtet ist, eine Temperatur des damit mechanisch verbundenen ersten, zweiten, dritten bzw. vierten Rohrs zu erfassen und ein nämliche Temperatur repräsentierendes, insb. elektrisches, erstes bzw. zweites Temperaturmeßsignal bereitzustellen.

5. Meßsystem nach dem vorherigen Anspruch, wobei die zweite Meßumformerschaltung dafür eingerichtet ist, das erste Temperaturmeßsignal vom ersten Temperatursensor zu empfangen und zu verarbeiten, nämlich die mit dem ersten Temperatursensor erfaßte Temperatur oder eine davon abhängige Temperatur repräsentierende, insb. digitale, erste Temperatur-Meßwerte zu ermitteln.

6. Meßsystem nach dem vorherigen Anspruch, wobei die zweite Meßumformerschaltung dafür eingerichtet ist, das zweite Temperaturmeßsignal vom zweiten Temperatursensor zu empfangen und zu verarbeiten, nämlich die mit dem zweiten Temperatursensor erfaßte Temperatur oder eine davon abhängige Temperatur repräsentierende, insb. digitale, zweite Temperatur-Meßwerte zu ermitteln.

7. Meßsystem nach dem vorherigen Anspruch,
- wobei die zweite Meßumformerschaltung dafür eingerichtet ist, die Gesamt-Massenstrom-Meßwerte auch unter Verwendung der ersten und zweiten Temperatur-Meßwerte zu ermitteln und zumindest die ersten Temperatur-Meßwerte, insb. die ersten und zweiten Temperatur-Meßwerte, an die erste Meßumformerschaltung auszugeben,
- und wobei die erste Meßumformerschaltung dafür eingerichtet ist, von der zweiten Meßumformerschaltung ausgegebene Temperatur-Meßwerte zu empfangen und auszuwerten, insb. nämlich die ersten Teil-Massenstrom-Meßwerte und/oder die ersten Teil-Dichte-Meßwerte auch unter Verwendung zumindest der ersten Temperatur-Meßwerte zu ermitteln.

8. Meßsystem nach einem der vorherigen Ansprüche, weiters umfassend: ein die ersten, zweiten, dritten und vierten Rohre umhüllendes Wandlergehäuse, wobei das Wandlergehäuse zumindest eine, insb. hermetisch geschlossene, Kavität aufweist und wobei jedes der ersten, zweiten, dritten und vierten Rohre innerhalb nämlicher Kavität angeordnet ist.

9. Meßsystem nach dem vorherigen Anspruch,
- wobei die Sensoranordnung wenigstens einen dritten Temperatursensor aufweist;
- wobei der dritte Temperatursensor mechanisch mit Wandlergehäuse sowie elektrisch, insb. lediglich, mit der zweiten Meßumformerschaltung verbunden und dafür eingerichtet ist, eine Temperatur des Wandlergehäuses zu erfassen und ein nämliche Temperatur repräsentierendes, insb. elektrisches, drittes Temperaturmeßsignal bereitzustellen;
- wobei die zweite Meßumformerschaltung dafür eingerichtet ist, das dritte Temperaturmeßsignal vom dritten Temperatursensor zu empfangen und zu verarbeiten, nämlich die mit dem dritten Temperatursensor erfaßte Temperatur oder eine davon abhängige Temperatur repräsentierende, insb. digitale, dritte Temperatur-Meßwerte zu ermitteln;
- und wobei die zweite Meßumformerschaltung dafür eingerichtet ist, die Gesamt-Massenstrom-Meßwerte auch unter Verwendung der dritten Temperatur-Meßwerte zu ermitteln.

10. Meßsystem nach dem vorherigen Anspruch,
- wobei die zweite Meßumformerschaltung dafür eingerichtet ist, die dritten Temperatur-Meßwerte an die erste Meßumformerschaltung auszugeben,
- und wobei die erste Meßumformerschaltung dafür eingerichtet ist, die dritten Temperatur-Meßwerte zu empfangen und auszuwerten, nämlich die ersten Massenstrom-Meßwerte auch unter Verwendung der dritten Temperatur-Meßwerte zu ermitteln.

11. Meßsystem nach einem der vorherigen Ansprüche, weiters umfassend: ein, insb. explosions- bzw. druckfesten, Elektronik-Schutzgehäuse (100), zum, insb. gegen Spritzwasser geschützten, Unterbringen von sowohl den ersten und zweiten Treiberschaltungen als auch den ersten und zweiten Meßumformerschaltungen.

12. Meßsystem nach einem der vorherigen Ansprüche, wobei die Meß- und Betriebselektronik (ME) weiters umfaßt: eine Schnittstellenschaltung (COM) zur Ausgabe von, insb. digitalen und/oder mittels der zweiten Meßumformerschaltung ermittelten, Meßwerten.

13. Meßsystem nach dem vorherigen Anspruch,
- wobei die Schnittstellenschaltung elektrisch mit der zweiten Meßumformerschaltung, insb. aber nicht mit der ersten Meßumformerschaltung elektrisch verbunden ist; und/oder
- wobei die zweite Meßumformerschaltung eingerichtet ist, damit ermittelte Gesamt-Durchfluß-Meßwerte an die Schnittstellenschaltung auszugeben,
- und wobei Schnittstellenschaltung eingerichtet ist, von der zweiten Meßumformerschaltung ausgegebene Gesamt-Massenstrom-Meßwerte zu empfangen und in ein nämliche Gesamt-Massenstrom-Meßwerte bereitstellendes, insb. zu einem Industriestandard konformes, Massenstrom-Ausgabesignal (xₘ) zu wandeln.

14. Meßsystem nach einem der vorherigen Ansprüche,
- wobei die erste Meßumformerschaltung dafür eingerichtet ist, basierend auf wenigstens einem der ersten und zweiten Schwingungsmeßsignale eine Dichte, ρ1, des durch die ersten und zweiten Rohre strömenden Meßstoffs repräsentierende, insb. digitale, erste Teil-Dichte-Meßwerte zu ermitteln und an die zweite Meßumformerschaltung auszugeben; und/oder
- wobei die zweite Meßumformerschaltung dafür eingerichtet ist, von der ersten Meßumformerschaltung ausgegebene erste Teil-Dichte-Meßwerte zu empfangen und basierend auf ersten Teil-Dichte-Meßwerten sowie wenigstens einem der dritten und vierten Schwingungsmeßsignale eine Dichte, ρ, des durch die ersten, zweiten, dritten und vierten Rohre strömenden Meßstoffs repräsentierende, insb. digitale, Gesamt-Dichte-Meßwerte zu ermitteln; und/oder
- wobei die zweite Meßumformerschaltung dafür eingerichtet ist, basierend auf wenigstens einem der dritten und vierten Schwingungsmeßsignale eine Dichte, ρ2, des durch die dritten und vierten Rohre strömenden Meßstoffs repräsentierende, insb. digitale, zweite Teil-Dichte-Meßwerte zu ermitteln sowie von der ersten Meßumformerschaltung ausgegebene erste Teil-Dichte-Meßwerte zu empfangen und basierend auf ersten und zweiten Teil-Dichte-Meßwerten eine, insb. mittlere, Dichte, ρ, des durch die ersten, zweiten, dritten und vierten Rohre strömenden Meßstoffs repräsentierende, insb. digitale, Gesamt-Dichte-Meßwerte zu ermitteln.

## Claims

1. A vibronic measuring system, in particular a Coriolis mass flow meter or Coriolis mass flow/density meter, for measuring and/or monitoring at least one, in particular time-variable, flow parameter, in particular a mass flow, a volume flow and/or a flow velocity, and/or for measuring and/or monitoring at least one, in particular time-variable, substance parameter, in particular a density and/or a viscosity, of a flowing measured substance, in particular a gas, a liquid or a dispersion, said measuring system comprising:
- A measuring transducer (MW)
• with a tube arrangement for conducting the flowing fluid,
• with an exciter arrangement for converting electrical power into mechanical power serving to excite and maintain forced mechanical oscillations of the tube arrangement,
• and with a sensor arrangement for detecting mechanical oscillations of the tube arrangement and for supplying oscillation measurement signals each representing oscillatory movements of the tube arrangement;
- and also measuring and operating electronics (ME) electrically coupled to the measuring transducer (MW), that is to say both to its exciter arrangement and its sensor arrangement, in particular by means of electrical connecting cables,
• with a first driver circuit (Exc1) for providing electrical power for the exciter arrangement,
• with a first transmitter circuit (DSV1) for processing oscillation measurement signals from the sensor arrangement and for actuating the first driver circuit,
• with a second driver circuit (Exc2) for providing electrical power for the exciter arrangement,
• and with a second transmitter circuit (DSV2) for processing oscillation measurement signals from the sensor arrangement and for actuating the second driver circuit;
- wherein the tube arrangement has
• a first flow divider (21), in particular serving as a line branch and/or on the inlet side, in particular with precisely four flow openings,
• a second flow divider (22), in particular of identical design to the first flow divider (21) and/or serving as a line junction and/or on the outlet side, in particular with precisely four flow openings,
• as well as four tubes which are only identical in design pairwise, that is to say
▪ a first tube (111), in particular curved at least in sections,
▪ a second tube (121) that is identical in design to the first tube,
▪ a third tube (112), in particular curved at least in sections,
▪ as well as a fourth tube (122) that is identical in design only to the third tube,
• wherein each of the first, second, third, and fourth tubes in the tube arrangement extends in each case from a respective first end of the respective tube to a respective second end of said tube with a respective tube length and has in each case a lumen surrounded by an, in particular metal, tube wall and extending in each case from the respective first end of the respective tube to the respective second end of said tube,
• wherein each of the first, second, third, and fourth tubes in the tube arrangement is connected in each case to each of the first and second flow dividers in such a way that
▪ the first tube opens with its first end into a first flow opening of the first flow divider (21) and with its second end into a first flow opening of the second flow divider (22),
▪ the second tube opens with its first end into a second flow opening of the first flow divider (21) and with its second end into a second flow opening of the second flow divider (22),
▪ the third tube opens with its first end into a third flow opening of the first flow divider (21) and with its second end into a third flow opening of the second flow divider (22),
▪ and the fourth tube opens with its first end into a fourth flow opening of the first flow divider (21) and with its second end into a fourth flow opening of the second flow divider (22),
▪ and wherein each of the first, second, third, and fourth tubes of the tube arrangement in each case is configured to have the measured substance flow through it and during that to be caused to oscillate;
- wherein the exciter arrangement has two, in particular electrodynamic and/or identical in design, oscillation exciters (31, 32) of which
• a first oscillation exciter (31) is mechanically connected both to the first tube and the second tube and electrically connected, in particular only, to the first driver circuit
• and a second oscillation exciter (32) is mechanically connected both to the third tube and the fourth tube and electrically connected, in particular only, to the second driver circuit,
• wherein each of the first and second oscillation exciters (31, 32) is in each case configured to convert electrical power into mechanical power;
- wherein the first driver circuit is configured to generate an electrical first driver signal (e31) and thereby to feed electrical power, in particular only, to the first oscillation exciter (31) in such a way that the first and second tubes carry out useful oscillations at least in part, that is to say mirror-inverted forced mechanical oscillations with at least a first useful frequency, that is to say an oscillation frequency specified by the first driver signal, in particular corresponding to a first resonant frequency of the tube arrangement, which are suitable for effecting Coriolis forces dependent on the mass flow in the measured substance flowing through each of the first and second tubes,
- and wherein the second driver circuit is configured to generate an electrical second driver signal (e32) and thereby to feed electrical power, in particular only, to the second oscillation exciter (32) in such a way that the third and fourth tubes carry out useful oscillations at least in part, that is to say mirror-inverted forced mechanical oscillations with at least a second useful frequency, that is to say an oscillation frequency specified by the second driver signal, in particular corresponding to a second resonant frequency of the tube arrangement, which are suitable for effecting Coriolis forces dependent on the mass flow in the measured substance flowing through each of the third and fourth tubes;
- wherein the sensor arrangement has four oscillation sensors, in particular electrodynamic and/or identical in design, and/or spaced apart from one another, of which
• a first oscillation sensor and a second oscillation sensor are mechanically connected in each case both to the first tube and the second tube and electrically connected in each case, in particular only, to the first transmitter circuit
• and a third oscillation sensor and a fourth oscillation sensor are mechanically connected in each case both to the third tube and the fourth tube and electrically connected in each case, in particular only, to the second transmitter circuit,
• wherein each of the first, second, third, and fourth oscillation sensors is in each case configured to detect oscillatory movements of the first, second, third, and fourth tubes mechanically connected thereto and to supply an, in particular electrical, first, second, third or fourth oscillation measurement signal representing said oscillatory movements;
- wherein the first transmitter circuit is configured to receive and process both the first oscillation measurement signal from the first oscillation sensor and the second oscillation measurement signal from the second oscillation sensor, that is to say to determine first, in particular digital, partial mass flow measured values (Xm1) representing a mass flow, m1, of the measured substance flowing through the first and second tubes and to output these to the second transmitter circuit,
- and wherein the second transmitter circuit is configured to receive and process both the third oscillation measurement signal from the third oscillation sensor and the fourth oscillation measurement signal from the fourth oscillation sensor, as well as first partial mass flow measured values output by the first transmitter circuit, that is to say to determine, in particular digital, total flow measured values (Xm) representing a total mass flow, m, of the measured substance flowing through the first, second, third, and fourth tubes.

2. The measuring system as claimed in the preceding claim,
- wherein the first driver circuit is electrically connected to the first transmitter circuit, in particular via a data bus, in particular is not electrically connected to the second transmitter circuit; and/or
- wherein the second driver circuit is electrically connected to the second transmitter circuit, in particular via a data bus, in particular is not electrically connected to the first transmitter circuit; and/or
- wherein the first transmitter circuit and the second transmitter circuit are electrically connected to each other, in particular via a data bus; and/or
- wherein the first transmitter circuit is formed by a first microprocessor and the second transmitter circuit by a second microprocessor.

3. The measuring system as claimed in one of the preceding claims, wherein the second transmitter circuit is configured, using the third and fourth oscillation measurement signals, to determine second, in particular digital, partial mass flow measured values (Xm2) representing a mass flow, m2, of the measured substance flowing through the third and fourth tubes, that is to say, in particular to determine the total flow measured values also using second partial mass flow measured values.

4. The measuring system as claimed in one of the preceding claims, wherein the sensor arrangement has at least two temperature sensors, in particular identical in design and/or spaced apart from one another, of which
- a first temperature sensor is mechanically connected to one of the first, second, third, and fourth tubes, that is to say, in particular to the first tube or to the second tube, and is in each case electrically connected, in particular only, to the second transmitter circuit,
- and a second temperature sensor is mechanically connected to one of the first, second, third, and fourth tubes, that is to say, in particular to the same tube as the first temperature sensor, and is in each case electrically connected, in particular only, to the second transmitter circuit,
- wherein each of the first and second temperature sensors is in each case configured to detect a temperature of the first, second, third, and fourth tubes mechanically connected thereto and to supply an, in particular electrical, first or second temperature measurement signal representing said temperature.

5. The measuring system as claimed in the preceding claim, wherein the second transmitter circuit is configured to receive and process the first temperature measurement signal from the first temperature sensor, that is to say to determine first, in particular digital, temperature measured values representing the temperature detected with the first temperature sensor or a temperature dependent thereon.

6. The measuring system as claimed in the preceding claim, wherein the second transmitter circuit is configured to receive and process the second temperature measurement signal from the second temperature sensor, that is to say to determine second, in particular digital, temperature measured values representing the temperature detected with the second temperature sensor or a temperature dependent thereon.

7. The measuring system as claimed in the preceding claim,
- wherein the second transmitter circuit is configured to determine the total mass flow measured values, also using the first and second temperature measured values, and to output at least the first temperature measured values, in particular the first and second temperature measured values, to the first transmitter circuit,
- and wherein the first transmitter circuit is configured to receive and analyze temperature measured values output by the second transmitter circuit, that is to say, in particular to determine the first partial mass flow measured values and/or the first partial density measured values, also using at least the first temperature measured values.

8. The measuring system as claimed in one of the preceding claims, further comprising: A transducer housing that encloses the first, second, third, and fourth tubes, wherein the transducer housing has at least one, in particular hermetically sealed, cavity and wherein each of the first, second, third, and fourth tubes is arranged within said cavity.

9. The measuring system as claimed in the preceding claim,
- wherein the sensor arrangement has at least a third temperature sensor;
- wherein the third temperature sensor is mechanically connected to the transducer housing and electrically connected, in particular only, to the second transmitter circuit and is configured to detect a temperature of the transducer housing and to supply an, in particular electrical, third temperature measurement signal representing said temperature;
- wherein the second transmitter circuit is configured to receive and process the third temperature measurement signal from the third temperature sensor, that is to say to determine third, in particular digital, temperature measured values representing the temperature detected with the third temperature sensor or a temperature dependent thereon
- and wherein the second transmitter circuit is configured to determine the total mass flow measured values, also using the third temperature measured values.

10. The measuring system as claimed in the preceding claim,
- wherein the second transmitter circuit is configured to output the third temperature measured values to the first transmitter circuit,
- and wherein the first transmitter circuit is configured to receive and analyze the third temperature measured values, that is to say to determine the first mass flow measured values, also using the third temperature measured values.

11. The measuring system as claimed in one of the preceding claims, further comprising: An, in particular explosion-proof and pressure-resistant, electronics protective housing (100), for housing both the first and second driver circuits as well as the first and second transmitter circuits, in particular so that they are protected against spray.

12. The measuring system as claimed in one of the preceding claims, wherein the measuring and operating electronics (ME) further comprise: An interface circuit (COM) for outputting measured values, in particular digital ones and/or ones determined using the second transmitter circuit.

13. The measuring system as claimed in the preceding claim,
- wherein the interface circuit is electrically connected to the second transmitter circuit, but in particular is not electrically connected to the first transmitter circuit; and/or
- wherein the second transmitter circuit is configured to output total flow measured values determined using it to the interface circuit,
- and wherein the interface circuit is configured to receive total mass flow measured values output by the second transmitter circuit and to convert them into a mass flow output signal (xm) supplying said total mass flow measured values, in particular one which complies with an industry standard.

14. The measuring system as claimed in one of the preceding claims,
- wherein the first transmitter circuit is configured to determine first, in particular digital, partial density measured values representing a density, p1, of the measured substance flowing through the first and second tubes, based on at least one of the first and second oscillation measurement signals, and to output these to the second transmitter circuit; and/or
- wherein the second transmitter circuit is configured to receive first partial density measured values output by the first transmitter circuit and to determine, in particular digital, total density measured values representing a density, p, of the measured substance flowing through the first, second, third, and fourth tubes, based on first partial density measured values, as well as at least one of the third and fourth oscillation measurement signals; and/or
- wherein the second transmitter circuit is configured to determine, in particular digital, second partial density measured values representing a density, p2, of the measured substance flowing through the third and fourth tubes, based on at least one of the third and fourth oscillation measurement signals, and to receive first partial density measured values output by the first transmitter circuit, and to determine, in particular digital, total density measured values representing an, in particular average, density, p, of the measured substance flowing through the first, second, third, and fourth tubes, based on first and second partial density measured values.

## Revendications

1. Système de mesure vibronique, notamment un débitmètre massique Coriolis ou un débitmètre massique/densimètre Coriolis, lequel système est destiné à la mesure et/ou à la surveillance d'au moins un paramètre d'écoulement, notamment variable dans le temps, notamment un débit massique, un débit volumique et/ou une vitesse d'écoulement, et/ou à la mesure et/ou à la surveillance d'au moins un paramètre, notamment variable dans le temps, notamment une densité et/ou une viscosité, d'un produit en écoulement, notamment un gaz, un liquide ou une dispersion, lequel système de mesure comprend :
- un transducteur (MW)
-- avec un arrangement de tubes destiné à guider le produit en écoulement,
-- avec un circuit d'excitation destiné à convertir la puissance électrique en puissance mécanique servant à exciter et à maintenir des vibrations mécaniques forcées de l'arrangement de tubes
-- et avec un arrangement de capteurs destiné à mesurer les vibrations mécaniques de l'arrangement de tubes et à fournir des signaux de mesure de vibration représentant respectivement les mouvements de vibration de l'arrangement de tubes ;
- ainsi qu'une électronique de mesure et de fonctionnement (ME) couplée électriquement au transducteur (MW), à savoir aussi bien à son circuit d'excitation qu'à son arrangement de capteurs, notamment au moyen de lignes de liaison électriques
-- avec un premier circuit d'attaque (Exc1) destiné à fournir la puissance électrique pour le circuit d'excitation,
-- avec un premier circuit de transmetteur (DSV1) destiné à traiter les signaux de mesure de vibration de l'arrangement de capteurs et à commander le premier circuit d'attaque,
-- avec un deuxième circuit d'attaque (Exc2) destiné à fournir la puissance électrique pour le circuit d'excitation,
-- et avec un deuxième circuit de transmetteur (DSV2) destiné à traiter les signaux de mesure de vibration de l'arrangement de capteurs et à commander le deuxième circuit d'attaque,
- l'arrangement de tubes présentant
-- un premier diviseur de débit (21), notamment servant de dérivation de conduites et/ou situé côté entrée, avec, notamment exactement, quatre ouvertures d'écoulement,
-- un deuxième diviseur de débit (22), notamment de construction identique au premier diviseur de débit (21) et/ou servant de jonction de conduites et/ou situé côté sortie, avec, notamment exactement, quatre ouvertures d'écoulement,
-- ainsi que quatre tubes de construction identique uniquement par paires, à savoir
--- un premier tube (111), notamment courbé au moins par tronçons,
--- un deuxième tube (121) de construction identique au premier tube,
--- un troisième tube (112), notamment courbé au moins par tronçons,
--- ainsi qu'un quatrième tube (122) de construction identique uniquement au troisième tube,
-- chacun des premier, deuxième, troisième et quatrième tubes de l'arrangement de tubes s'étendant respectivement d'une première extrémité respective du tube respectif jusqu'à une deuxième extrémité respective du même tube avec une longueur de tube respective et présentant respectivement un canal intérieur entouré par une paroi de tube, notamment métallique, lequel canal s'étend respectivement de la première extrémité respective du tube respectif jusqu'à la deuxième extrémité respective du même tube,
-- chacun des premier, deuxième, troisième et quatrième tubes de l'arrangement de tubes étant raccordé respectivement à chacun des premier et deuxième diviseurs de débit, de telle sorte
--- que le premier tube débouche avec sa première extrémité dans une première ouverture d'écoulement du premier diviseur de débit (21) et avec sa deuxième extrémité dans une première ouverture d'écoulement du deuxième diviseur de débit (22),
--- que le deuxième tube débouche avec sa première extrémité dans une deuxième ouverture d'écoulement du premier diviseur de débit (21) et avec sa deuxième extrémité dans une deuxième ouverture d'écoulement du deuxième diviseur de débit (22),
--- que le troisième tube débouche avec sa première extrémité dans une troisième ouverture d'écoulement du premier diviseur de débit (21) et avec sa deuxième extrémité dans une troisième ouverture d'écoulement du deuxième diviseur de débit (22)
--- et que le quatrième tube débouche avec sa première extrémité dans une quatrième ouverture d'écoulement du premier diviseur de débit (21) et avec sa deuxième extrémité dans une quatrième ouverture d'écoulement du deuxième diviseur de débit (22),
--- et chacun des premier, deuxième, troisième et quatrième tubes de l'arrangement de tubes étant respectivement conçu pour être traversé par un produit et pour être mis en vibration pendant ce temps ;
- pour lequel le circuit d'excitation comprend deux excitateurs de vibrations (31, 32), notamment électrodynamiques et/ou de construction identique, parmi lesquels excitateurs
-- un premier excitateur de vibrations (31) est relié mécaniquement à la fois au premier tube et au deuxième tube ainsi qu'électriquement, notamment exclusivement, au premier circuit d'attaque
-- et un deuxième excitateur de vibrations (32) est relié mécaniquement à la fois au troisième tube et au quatrième tube et électriquement, notamment exclusivement, au deuxième circuit d'attaque,
-- chacun des premier et deuxième excitateurs de vibrations (31, 32) étant respectivement conçu pour convertir la puissance électrique en puissance mécanique ;
- pour lequel le premier circuit d'attaque est conçu pour générer un premier signal d'attaque électrique (e31) et pour injecter ainsi de la puissance électrique, notamment exclusivement, dans le premier excitateur de vibrations (31), de telle sorte que les premier et deuxième tubes exécutent au moins en partie des vibrations utiles, à savoir des vibrations mécaniques forcées diamétralement opposées avec au moins une première fréquence utile, à savoir une fréquence de vibration prédéfinie par le premier signal d'attaque, laquelle fréquence correspond notamment à une première fréquence de résonance de l'arrangement de tubes, lesquelles vibrations sont appropriées pour provoquer des forces de Coriolis dépendant du débit massique dans le produit s'écoulant respectivement à travers les premier et deuxième tubes,
- et pour lequel le deuxième circuit d'attaque est conçu pour générer un deuxième signal d'attaque électrique (e32) et pour injecter ainsi de la puissance électrique, notamment exclusivement, dans le deuxième excitateur de vibrations (32), de telle sorte que les troisième et quatrième tubes exécutent au moins en partie des vibrations utiles, à savoir des vibrations mécaniques forcées diamétralement opposées avec au moins une deuxième fréquence utile, à savoir une fréquence de vibration prédéfinie par le deuxième signal d'attaque, laquelle fréquence correspond notamment à une deuxième fréquence de résonance de l'arrangement de tubes, lesquelles vibrations sont appropriées pour provoquer des forces de Coriolis dépendant du débit massique dans le produit s'écoulant respectivement à travers les troisième et quatrième tubes
- pour lequel l'arrangement de capteurs présente quatre capteurs de vibrations, notamment électrodynamiques et/ou de construction identique et/ou espacés les uns des autres, capteurs parmi lesquels
-- un premier capteur de vibrations et un deuxième capteur de vibrations sont reliés mécaniquement respectivement à la fois au premier tube et au deuxième tube ainsi qu'électriquement respectivement, notamment exclusivement, au premier circuit de transmetteur et un troisième capteur de vibrations et un quatrième capteur de vibrations sont reliés mécaniquement respectivement à la fois au troisième tube et au quatrième tube ainsi qu'électriquement respectivement, notamment exclusivement, au deuxième circuit de transmetteur,
-- chacun des premier, deuxième, troisième et quatrième capteurs de vibrations étant respectivement conçu pour détecter des mouvements de vibrations des premier, deuxième, troisième ou quatrième tubes reliés mécaniquement aux capteurs respectifs, et pour fournir un premier, deuxième, troisième ou quatrième signal de mesure de vibrations, notamment électrique, représentant lesdits mouvements de vibration ;
- pour lequel le premier circuit de transmetteur est conçu pour recevoir et traiter aussi bien le premier signal de mesure de vibration provenant du premier capteur de vibrations que le deuxième signal de mesure de vibration provenant du deuxième capteur de vibrations, à savoir déterminer des premières valeurs mesurées de débit massique partielles (Xₘ₁), notamment numériques, lesquelles valeurs représentent un débit massique, m1, du produit s'écoulant à travers les premier et deuxième tubes, et les délivrer au deuxième circuit de transmetteur,
- et pour lequel le deuxième circuit de transmetteur est conçu pour recevoir et traiter aussi bien le troisième signal de mesure de vibration provenant du troisième capteur de vibrations que le quatrième signal de mesure de vibration provenant du quatrième capteur de vibration ainsi que des premières valeurs mesurées de débit massique partielles délivrées par le premier circuit de transmetteur, à savoir pour déterminer des valeurs mesurées de débit totales (Xₘ), notamment numériques, représentant un débit massique total, m, du produit s'écoulant à travers les premier, deuxième, troisième et quatrième tubes.

2. Système de mesure selon la revendication précédente,
- pour lequel le premier circuit d'attaque, notamment par l'intermédiaire d'un bus de données, est relié électriquement au premier circuit de transmetteur, notamment non relié électriquement au deuxième circuit de transmetteur ; et/ou
- pour lequel le deuxième circuit d'attaque, notamment par l'intermédiaire d'un bus de données, est relié électriquement au deuxième circuit de transmetteur, notamment non relié électriquement au premier circuit de transmetteur ; et/ou
- pour lequel le premier circuit de transmetteur et le deuxième circuit de transmetteur sont reliés électriquement l'un à l'autre, notamment par l'intermédiaire d'un bus de données ; et/ou
- pour lequel le premier circuit de transmetteur est formé au moyen d'un premier microprocesseur et le deuxième circuit de transmetteur est formé au moyen d'un deuxième microprocesseur.

3. Système de mesure selon l'une des revendications précédentes, pour lequel le deuxième circuit de transmetteur est conçu pour déterminer, en utilisant les troisième et quatrième signaux de mesure de vibration, des deuxièmes valeurs mesurées de débit massique partielles (Xₘ₂), notamment numériques, représentant un débit massique, m2, du produit s'écoulant à travers les troisième et quatrième tubes, notamment à savoir pour déterminer les valeurs mesurées de débit totales en utilisant également des deuxièmes valeurs mesurées de débit massique partielles.

4. Système de mesure selon l'une des revendications précédentes, pour lequel l'arrangement de capteurs présente au moins deux capteurs de température, notamment de construction identique et/ou espacés l'un de l'autre, parmi lesquels capteurs
- un premier capteur de température est relié mécaniquement à l'un des premier, deuxième, troisième et quatrième tubes, notamment à savoir au premier tube ou au deuxième tube, ainsi qu'électriquement respectivement, notamment exclusivement, au deuxième circuit de transmetteur,
- et un deuxième capteur de température est relié mécaniquement à l'un des premier, deuxième, troisième et quatrième tubes, notamment au même tube que le premier capteur de température, ainsi qu'électriquement respectivement, notamment exclusivement, au deuxième circuit de transmetteur,
- chacun des premier et deuxième capteurs de température étant conçu pour mesurer une température des premier, deuxième, troisième ou quatrième tubes reliés mécaniquement aux capteurs respectifs et pour fournir un premier ou deuxième signal de mesure de température, notamment électrique, représentatif de la même température.

5. Système de mesure selon la revendication précédente, pour lequel le deuxième circuit de transmetteur est conçu pour recevoir et traiter le premier signal de mesure de température provenant du premier capteur de température, à savoir pour déterminer les premières valeurs mesurées de température, notamment numériques, représentant la température mesurée par le premier capteur de température ou une température qui en dépend.

6. Système de mesure selon la revendication précédente, pour lequel le deuxième circuit de transmetteur est conçu pour recevoir et traiter le deuxième signal de mesure de température provenant du deuxième capteur de température, à savoir pour déterminer des deuxièmes valeurs mesurées de température, notamment numériques, représentant la température mesurée par le deuxième capteur de température ou une température qui en dépend.

7. Système de mesure selon la revendication précédente,
- pour lequel le deuxième circuit de transmetteur est conçu pour déterminer les valeurs mesurées de débit massique totales également en utilisant les premières et les deuxièmes valeurs mesurées de température et pour délivrer au moins les premières valeurs mesurées de température, notamment les premières et les deuxièmes valeurs mesurées de température, au premier circuit de transmetteur,
- et pour lequel le premier circuit de transmetteur est conçu pour recevoir et évaluer des valeurs mesurées de température délivrées par le deuxième circuit de transmetteur, notamment pour déterminer les premières valeurs mesurées de débit massique partielles et/ou les premières valeurs mesurées de densité partielles également en utilisant au moins les premières valeurs mesurées de température.

8. Système de mesure selon l'une des revendications précédentes, comprenant en outre : un boîtier de transducteur enveloppant les premier, deuxième, troisième et quatrième tubes, le boîtier de transducteur présentant au moins une cavité, notamment fermée hermétiquement, et chacun des premier, deuxième, troisième et quatrième tubes étant disposé à l'intérieur de la même cavité.

9. Système de mesure selon la revendication précédente,
- pour lequel l'arrangement de capteurs présente au moins un troisième capteur de température ;
- le troisième capteur de température étant relié mécaniquement au boîtier du transducteur ainsi qu'électriquement, notamment exclusivement, au deuxième circuit de transmetteur et étant conçu pour mesurer une température du boîtier du transducteur et pour fournir un troisième signal de mesure de température, notamment électrique, représentant la même température ;
- le deuxième circuit de transmetteur étant conçu pour recevoir le troisième signal de mesure de température du troisième capteur de température et pour le traiter, à savoir pour déterminer la température mesurée par le troisième capteur de température ou une troisième valeur mesurée de température, notamment numérique, représentant la température qui en dépend ;
- et le deuxième circuit de transmetteur étant conçu pour déterminer les valeurs mesurées de débit massique totales également en utilisant les troisièmes valeurs mesurées de température.

10. Système de mesure selon la revendication précédente,
- pour lequel le deuxième circuit de transmetteur est conçu pour délivrer les troisièmes valeurs mesurées de température au premier circuit de transmetteur,
- et pour lequel le premier circuit de transmetteur est conçu pour recevoir et évaluer les troisièmes valeurs mesurées de température, à savoir pour déterminer les premières valeurs mesurées de débit massique également en utilisant les troisièmes valeurs mesurées de température.

11. Système de mesure selon l'une des revendications précédentes, comprenant en outre : un boîtier de protection électronique (100), notamment antidéflagrant, lequel boîtier est destiné à loger, notamment à l'abri des projections d'eau, aussi bien les premier et deuxième circuits d'attaque que les premier et deuxième circuits de transmetteur.

12. Système de mesure selon l'une des revendications précédentes, pour lequel l'électronique de mesure et de fonctionnement (ME) comprend en outre : un circuit d'interface (COM) destiné à délivrer des valeurs mesurées, notamment numériques et/ou déterminées au moyen du deuxième circuit de transmetteur.

13. Système de mesure selon la revendication précédente,
- pour lequel le circuit d'interface est relié électriquement au deuxième circuit de transmetteur, notamment cependant pas au premier circuit de transmetteur ; et/ou
- pour lequel le deuxième circuit de transmetteur est conçu pour délivrer au circuit d'interface des valeurs mesurées de débit totales déterminées à l'aide dudit circuit de transmetteur,
- et pour lequel le circuit d'interface est conçu pour recevoir les valeurs mesurées de débit massique totales délivrées par le deuxième circuit de transmetteur et pour les convertir en un signal de sortie de débit massique (xₘ) fournissant lesdites valeurs mesurées de débit massique totales, lequel signal est notamment conforme à un standard industriel.

14. Système de mesure selon l'une des revendications précédentes,
- pour lequel le premier circuit de transmetteur est conçu pour déterminer, sur la base d'au moins l'un des premier et deuxième signaux de mesure de vibration, des premières valeurs mesurées de densité partielles, notamment numériques, lesquelles représentent une densité, p1, du produit s'écoulant à travers les premier et deuxième tubes, et pour les délivrer au deuxième circuit de transmetteur ; et/ou
- pour lequel le deuxième circuit de transmetteur est conçu pour recevoir les premières valeurs mesurées de densité partielles délivrées par le premier circuit de transmetteur et pour déterminer, sur la base des premières valeurs mesurées de densité partielles ainsi que d'au moins l'un des troisième et quatrième signaux de mesure de vibration, des valeurs mesurées de densité totales, notamment numériques, lesquelles représentent une densité, p1, du produit s'écoulant à travers les premier, deuxième, troisième et quatrième tubes ; et/ou
- pour lequel le deuxième circuit de transmetteur est conçu pour déterminer, sur la base d'au moins l'un des troisième et quatrième signaux de mesure de vibration, des deuxièmes valeurs mesurées de densité partielles, notamment numériques, lesquelles représentent une densité, p2, du produit s'écoulant à travers les troisième et quatrième tubes, ainsi que pour recevoir des premières valeurs mesurées de densité partielles délivrées par le premier circuit de transmetteur, et pour déterminer, sur la base des premières et des deuxièmes valeurs mesurées de densité partielles, des valeurs mesurées de densité totales, notamment numériques, lesquelles représentent une densité, p, notamment moyenne, du produit s'écoulant à travers les premier, deuxième, troisième et quatrième tubes.
